# EUROPEAN PATENT APPLICATION

(11) **EP 4 459 837 A1**
(43) Date of publication of application: **06.11.2024**
(21) Application number: 23853939.9
(22) Date of filing: 25.04.2023
(51) Int. Cl.: H02J 50/10

(54) **WIRELESS CHARGING CONTROL METHOD AND ELECTRONIC DEVICE**

(30) Priority: 19.08.2022 CN 202211001650
(71) Applicant: Honor Device Co., Ltd., Shenzhen, Guangdong 518040 (CN)
(72) Inventor: ZHAO, Chunjiang, Shenzhen, Guangdong 518040 (CN); HUANG, Song, Shenzhen, Guangdong 518040 (CN)
(74) Representative: Beder, Jens
(86) International application number: PCT/CN2023/090691
(87) International publication number: WO 2024/037031

(57) **Abstract**

This application provides a wireless charging control method and an electronic device, and relates to the field of wireless charging technologies, to implement reverse wireless charging of an electronic device with a wireless charging coil with a small inductance to the outside. The method may include: After a second electronic device is detected, a first electronic device propagates a first alternating electromagnetic field to the second electronic device by using a wireless charging coil, to wirelessly charge the second electronic device. The first alternating electromagnetic field is generated by induction of the wireless charging coil to a first alternating current signal. A working frequency of the first alternating current signal is a first working frequency, and a duty cycle of the first alternating current signal is a first duty cycle. The first working frequency is less than a preset working frequency, and the first duty cycle is greater than or equal to a preset duty cycle, or the first working frequency is equal to a preset working frequency, and the first duty cycle is greater than a preset duty cycle. A power of a preset alternating current signal corresponding to the preset working frequency and the preset duty cycle meets a wireless charging standard.

## Description

This application claims priority to Chinese Patent Application No. 202211001650.9, filed with the China National Intellectual Property Administration on August 19, 2022 and entitled "WIRELESS CHARGING CONTROL METHOD, AND ELECTRONIC DEVICE", which is incorporated herein by reference in its entirety.

### TECHNICAL FIELD

This application relates to the field of wireless charging technologies, and in particular, to a wireless charging control method and an electronic device.

### BACKGROUND

Currently, for electronic devices on the market that support wireless charging, some electronic devices are charged as wireless charging receive ends, while some electronic devices may be used as wireless charging transmit ends to supply power to another device (for example, a mobile phone is used as a transmit end to charge a watch or a headset), that is, support a reverse wireless charging function. For an electronic device with a wireless charging coil with a small inductance, when the electronic device is used as a wireless charging transmit end to supply power to the outside, there are problems such as insufficient reverse charging energy. As a result, a wireless charging receive end cannot be stably charged.

### SUMMARY

In view of this, this application provides a wireless charging control method and an electronic device, to implement reverse wireless charging of an electronic device with a wireless charging coil with a small inductance to the outside.

According to a first aspect, this application provides a wireless charging control method. The method may be applied to a first electronic device and used for wirelessly charging a second electronic device by the first electronic device. An inductance of a wireless charging coil of the first electronic device is less than a preset inductance threshold.

The method may include: The first electronic device detects the second electronic device. After the second electronic device is detected, the first electronic device propagates a first alternating electromagnetic field to the second electronic device by using the wireless charging coil, to wirelessly charge the second electronic device. The first alternating electromagnetic field is generated by induction of the wireless charging coil to a first alternating current signal. A working frequency of the first alternating current signal is a first working frequency, and a duty cycle of the first alternating current signal is a first duty cycle; the first working frequency is less than a preset working frequency, and the first duty cycle is greater than or equal to a preset duty cycle, or the first working frequency is equal to a preset working frequency, and the first duty cycle is greater than a preset duty cycle; and a power of a preset alternating current signal corresponding to the preset working frequency and the preset duty cycle meets a wireless charging standard.

In this application, an alternating current signal applied to the wireless charging coil of the first electronic device is set as the first alternating current signal. The working frequency of the first alternating current signal is the first working frequency, and the duty cycle of the first alternating current signal is the first duty cycle. The first working frequency is less than the preset working frequency, and the first duty cycle is greater than or equal to the preset duty cycle, or the first working frequency is equal to the preset working frequency, and the first duty cycle is greater than the preset duty cycle. In addition, the power of the preset alternating current signal corresponding to the preset working frequency and the preset duty cycle meets the wireless charging standard. In this way, based on the preset alternating current signal whose power meets the wireless charging standard, a power of the alternating current signal applied to the wireless charging coil of the first electronic device is increased through reducing the working frequency of the alternating current signal and/or increasing the duty cycle of the alternating current signal, so that the wireless charging coil of the first electronic device can output more energy to charge the second electronic device, to implement stable reverse wireless charging of an electronic device with a wireless charging coil with a small inductance to the outside.

In a possible implementation of the first aspect, the wireless charging standard specifies a power range of a power output when a standard wireless charger wirelessly charges another electronic device. An inductance of a wireless charging coil of the standard wireless charger is greater than or equal to the preset inductance threshold.

It should be understood that the inductance of the wireless charging coil of the standard wireless charger specified by the wireless charging standard is greater than or equal to the preset inductance threshold (that is, the inductance is relatively large). Under a same parameter condition, the standard wireless charger can output a larger power than the electronic device with the wireless charging coil with the small inductance. In technical solutions provided in this application, that the power of the alternating current signal applied to the wireless charging coil of the first electronic device is increased through reducing the working frequency of the alternating current signal applied to the wireless charging coil of the first electronic device and/or increasing the duty cycle of the alternating current signal applied to the wireless charging coil of the first electronic device means that the power meets the power range that is specified by the wireless charging standard and that is of the power output when the standard wireless charger wirelessly charges another electronic device, to implement stable reverse wireless charging of the electronic device with the wireless charging coil with the small inductance to the outside.

In a possible implementation of the first aspect, that the first electronic device detects the second electronic device includes: The first electronic device transmits a detection signal by using the wireless charging coil. A working frequency of the detection signal is the preset working frequency, a duty cycle of the detection signal is the preset duty cycle, a power of the detection signal corresponding to the preset working frequency and the preset duty cycle meets the wireless charging standard, and the detection signal is the preset alternating current signal. If the first electronic device receives a signal strength SIG message from the second electronic device by using the wireless charging coil, it is determined that the second electronic device is detected.

According to the foregoing implementation, in a detection stage, the working frequency of the detection signal may be set as the preset working frequency, and the duty cycle of the detection signal may be set as the preset duty cycle, so that the power of the detection signal meets the wireless charging standard. In this way, the detection signal transmitted by the first electronic device may carry enough energy, and the energy is transmitted to the second electronic device. Even in a scenario in which the second electronic device is in a power-off state, the second electronic device can activate a wireless charging control module of the second electronic device by receiving the energy transmitted by using the detection signal of the first electronic device, to enable a communication function of the second electronic device, so that the second electronic device can reply with a SIG message to the first electronic device. In this way, the first electronic device can receive the SIG message, determine that the second electronic device is detected, and further charge the second electronic device.

In another possible implementation of the first aspect, after the first electronic device detects the second electronic device, the foregoing method further includes: Before the first electronic device and the second electronic device enter a power transmission stage, the first electronic device receives an indication message from the second electronic device by using the wireless charging coil. The indication message includes a maximum voltage supported by the second electronic device for wireless charging.

That the first electronic device propagates a first alternating electromagnetic field to the second electronic device by using the wireless charging coil, to wirelessly charge the second electronic device includes: If the maximum voltage supported by the second electronic device for wireless charging is less than or equal to a preset voltage threshold, the first electronic device propagates the first alternating electromagnetic field to the second electronic device by using the wireless charging coil, to wirelessly charge the second electronic device.

According to the foregoing implementation, in a scenario in which a wireless charging coil of the second electronic device is also a coil with a small inductance, and an energy receiving capability of the second electronic device is weak, the second electronic device may send an indication message to the first electronic device, to notify the first electronic device that the second electronic device requires more energy, and the first electronic device may adjust, based on a maximum voltage that is supported by the second electronic device for wireless charging and that is included in the indication message, a parameter (including a working frequency, a duty cycle, and a voltage) of an alternating current signal transmitted to the wireless charging coil, to provide more energy for the second electronic device. When the maximum voltage supported by the second electronic device for wireless charging is less than or equal to a preset voltage threshold (that is, the second electronic device does not support high-voltage forward wireless charging), the first electronic device adjusts the alternating current signal applied to the wireless charging coil to be the first alternating current signal. To be specific, based on the preset alternating current signal, a power of the alternating current signal applied to the wireless charging coil is increased in a manner of keeping the voltage unchanged and only reducing the working frequency and/or increasing the duty cycle.

In another possible implementation of the first aspect, the method further includes: If the maximum voltage supported by the second electronic device for wireless charging is greater than a preset voltage threshold, the first electronic device propagates a second alternating electromagnetic field to the second electronic device by using the wireless charging coil, to wirelessly charge the second electronic device. The second alternating electromagnetic field is generated by induction of the wireless charging coil to a second alternating current signal. A working frequency of the second alternating current signal is a second working frequency, and a duty cycle of the second alternating current signal is a second duty cycle. The second working frequency is less than or equal to the preset working frequency, the second duty cycle is greater than or equal to the preset duty cycle, and a voltage of the second alternating current signal is greater than a voltage of the preset alternating current signal.

According to the foregoing implementation, when the maximum voltage supported by the second electronic device for wireless charging is greater than the preset voltage threshold (that is, the second electronic device supports high-voltage forward wireless charging), the first electronic device adjusts the alternating current signal applied to the wireless charging coil to be the second alternating current signal. To be specific, based on the preset alternating current signal, the power of the alternating current signal applied to the wireless charging coil is increased in a manner of increasing the voltage and reducing the working frequency and/or increasing the duty cycle.

In another possible implementation of the first aspect, the method further includes: The first electronic device determines whether there is a working frequency range disabled for wireless charging of the second electronic device. If the maximum voltage supported by the second electronic device for wireless charging is less than or equal to a preset voltage threshold, and there is no working frequency range disabled for wireless charging of the second electronic device, the first electronic device propagates the first alternating electromagnetic field to the second electronic device by using the wireless charging coil, to wirelessly charge the second electronic device.

According to the foregoing implementation, if the first electronic device determines that the second electronic device does not support high-voltage forward wireless charging and there is no working frequency range disabled for wireless charging of the second electronic device, based on the preset alternating current signal, the first electronic device may increase a power of the alternating current signal applied to the wireless charging coil in a manner of keeping the voltage unchanged and reducing the working frequency and/or increasing the duty cycle.

In another possible implementation of the first aspect, the method further includes: The first electronic device determines whether there is a working frequency range disabled for wireless charging of the second electronic device. If the maximum voltage supported by the second electronic device for wireless charging is greater than a preset voltage threshold, and there is no working frequency range disabled for wireless charging of the second electronic device, the first electronic device propagates the second alternating electromagnetic field to the second electronic device by using the wireless charging coil, to wirelessly charge the second electronic device.

According to the foregoing implementation, if the first electronic device determines that the second electronic device supports high-voltage forward wireless charging and there is no working frequency range disabled for wireless charging of the second electronic device, based on the preset alternating current signal, the first electronic device may increase a power of the alternating current signal applied to the wireless charging coil in a manner of increasing the voltage and reducing the working frequency and/or increasing the duty cycle.

In another possible implementation of the first aspect, the method further includes: If the maximum voltage supported by the second electronic device for wireless charging is less than or equal to a preset voltage threshold, and there is the working frequency range disabled for wireless charging of the second electronic device, the first electronic device propagates a third alternating electromagnetic field to the second electronic device by using the wireless charging coil, to wirelessly charge the second electronic device. The third alternating electromagnetic field is generated by induction of the wireless charging coil to a third alternating current signal. A working frequency of the third alternating current signal is a third working frequency, and a duty cycle of the third alternating current signal is a third duty cycle. The third working frequency is not within the working frequency range disabled for wireless charging of the second electronic device, the third duty cycle is greater than or equal to the preset duty cycle, and a voltage of the third alternating current signal is equal to a voltage of the preset alternating current signal. A power of the third alternating current signal is greater than the power of the preset alternating current signal.

That is, if the first electronic device determines that the second electronic device does not support high-voltage forward wireless charging and there is the working frequency range disabled for wireless charging of the second electronic device, the first electronic device adjusts the alternating current signal applied to the wireless charging coil to be the third alternating current signal. To be specific, based on the preset alternating current signal, the power of the alternating current signal applied to the wireless charging coil is increased in a manner of keeping the voltage unchanged and adjusting the working frequency to ensure that an adjusted working frequency is not within the working frequency range disabled for wireless charging of the second electronic device and/or increasing the duty cycle.

In another possible implementation of the first aspect, the method further includes: If the maximum voltage supported by the second electronic device for wireless charging is greater than a preset voltage threshold, and there is the working frequency range disabled for wireless charging of the second electronic device, the first electronic device propagates a fourth alternating electromagnetic field to the second electronic device by using the wireless charging coil, to wirelessly charge the second electronic device. The fourth alternating electromagnetic field is generated by induction of the wireless charging coil to a fourth alternating current signal. A working frequency of the fourth alternating current signal is a fourth working frequency, and a duty cycle of the fourth alternating current signal is a fourth duty cycle. The fourth working frequency is not within the working frequency range disabled for wireless charging of the second electronic device. The fourth duty cycle is greater than or equal to the preset duty cycle, and a voltage of the fourth alternating current signal is greater than a voltage of the preset alternating current signal. A power of the fourth alternating current signal is greater than the power of the preset alternating current signal.

That is, if the first electronic device determines that the second electronic device supports high-voltage forward wireless charging and there is the working frequency range disabled for wireless charging of the second electronic device, the first electronic device adjusts the alternating current signal applied to the wireless charging coil to be the fourth alternating current signal. To be specific, based on the preset alternating current signal, the power of the alternating current signal applied to the wireless charging coil is increased in a manner of increasing the voltage and adjusting the working frequency to ensure that an adjusted working frequency is not within the working frequency range disabled for wireless charging of the second electronic device and/or increasing the duty cycle.

In another possible implementation of the first aspect, the method further includes: The indication message carries the working frequency range disabled for wireless charging of the second electronic device.

In another possible implementation of the first aspect, the inductance of the wireless charging coil is 3.5 µH, the first working frequency is 110 kHz, and the first duty cycle is 60%.

According to a second aspect, this application provides a wireless charging control method. The method may be applied to a second electronic device and used for wirelessly charging the second electronic device by a first electronic device. An inductance of a wireless charging coil of the second electronic device is less than a preset inductance threshold.

The method includes: Before the second electronic device and the first electronic device enter a power transmission stage, the second electronic device sends an indication message to the first electronic device by using the wireless charging coil. The indication message includes a maximum voltage supported by the second electronic device for wireless charging. The second electronic device performs induction to, by using the wireless charging coil, an alternating electromagnetic field provided by the first electronic device, to implement wireless charging of the first electronic device for the second electronic device. The alternating current electromagnetic field provided by the first electronic device is generated based on an alternating current signal adjusted based on the maximum voltage supported by the second electronic device for wireless charging.

In a possible implementation of the second aspect, the indication message further carries a working frequency range disabled for wireless charging of the second electronic device. The alternating electromagnetic field provided by the first electronic device is generated based on an alternating current signal adjusted based on the maximum voltage supported by the second electronic device for wireless charging and the working frequency range disabled for wireless charging of the second electronic device.

For a method for adjusting the alternating current signal by the first electronic device based on the maximum voltage supported by the second electronic device for wireless charging and the working frequency range disabled for wireless charging of the second electronic device, refer to the method according to any one of the first aspect and the possible implementations of the first aspect. Details are not described herein again.

According to a third aspect, this application provides an electronic device, where the electronic device is a first electronic device. The first electronic device has a function of wirelessly charging a second electronic device. The first electronic device includes a wireless charging control module, a wireless charging coil, a memory, a battery, and one or more processors. An inductance of the wireless charging coil is less than a preset inductance threshold. The wireless charging control module, the wireless charging coil, the memory, and the battery are coupled to the processor. The memory stores computer program code, and the computer program code includes computer instructions. When the computer instructions are executed by the processor, the first electronic device is enabled to perform the method according to any one of the first aspect or the possible implementations of the first aspect.

According to a fourth aspect, this application provides an electronic device, where the electronic device is a second electronic device. The second electronic device has a function of receiving wireless charging from a first electronic device. The second electronic device includes a wireless charging control module, a wireless charging coil, and a memory. An inductance of the wireless charging coil is less than a preset inductance threshold. The wireless charging control module is coupled to the wireless charging coil and the memory. The memory stores computer program code, and the computer program code includes computer instructions. When the computer instructions are executed by the wireless charging control module, the second electronic device is enabled to perform the method according to any one of the second aspect or the possible implementations of the second aspect.

In a possible implementation of the fourth aspect, the wireless charging control module includes a microprocessor. The microprocessor is configured to execute the computer instructions, so that the second electronic device is enabled to perform the method according to any one of the second aspect and the possible implementations of the second aspect.

According to a fifth aspect, this application provides a computer readable storage medium, including computer instructions. When the computer instructions are run on an electronic device, the electronic device is enabled to perform the method according to any one of the first aspect, the second aspect, and the possible implementations of the first aspect or the second aspect.

According to a sixth aspect, this application provides a computer program product. When the computer program product is run on a computer, the computer is enabled to perform the method according to any one of the first aspect, the second aspect, and the possible implementations of the first aspect or the second aspect. The computer may be the foregoing electronic device.

It may be understood that for beneficial effect that can be achieved by the electronic device according to any one of the third aspect, the fourth aspect, and the possible implementations of the third aspect or the fourth aspect, the computer storage medium according to the fifth aspect, and the computer program product according to the sixth aspect, refer to beneficial effect in any one of the first aspect, the second aspect, and the possible implementations of the first aspect or the second aspect. Details are not described herein again.

### BRIEF DESCRIPTION OF DRAWINGS

FIG. 1 is a diagram of a structure of a wireless charging circuit according to an embodiment of this application;
FIG. 2 is a diagram of a structure of an electronic device according to an embodiment of this application;
FIG. 3A is a flowchart of interaction between a first electronic device and a second electronic device according to an embodiment of this application;
FIG. 3B(1) and FIG. 3B(2) are another flowchart of interaction between a first electronic device and a second electronic device according to an embodiment of this application;
FIG. 4 is a curve diagram of a frequency and a gain of an alternating current signal output by a first electronic device according to an embodiment of this application;
FIG. 5A and FIG. 5B are another flowchart of interaction between a first electronic device and a second electronic device according to an embodiment of this application;
FIG. 6A to FIG. 6C are another flowchart of interaction between a first electronic device and a second electronic device according to an embodiment of this application;
FIG. 7 is an operation flowchart of a wireless charging control module of a second electronic device according to an embodiment of this application;
FIG. 8 is an operation flowchart of a wireless charging control module of a second electronic device according to an embodiment of this application;
FIG. 9 is an operation flowchart of a wireless charging control module of a first electronic device according to an embodiment of this application; and
FIG. 10 is a diagram of a structure of a chip system according to an embodiment of this application.

### DESCRIPTION OF EMBODIMENTS

The following terms "first" and "second" are merely intended for a purpose of description, and shall not be understood as indicating or implying relative importance or implying a quantity of indicated technical features. Therefore, a feature limited by "first" or "second" may explicitly or implicitly include one or more features. In descriptions of embodiments, unless otherwise specified, "a plurality of" means two or more.

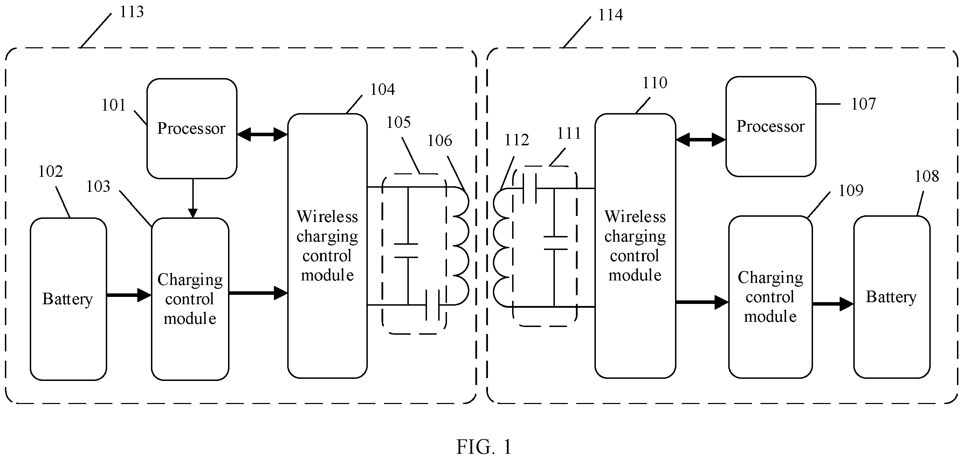

To facilitate understanding of technical solutions in embodiments of this application, a principle of wireless charging is first described with reference to accompanying drawings. Refer to FIG. 1. FIG. 1 is a diagram of a structure of a wireless charging circuit according to an embodiment of this application.

As shown in FIG. 1, a first electronic device 113 includes a processor 101, a battery 102, a charging control module 103, a wireless charging control module 104, a matching circuit 105, and a wireless charging coil 106. As shown in FIG. 1, a second electronic device 114 includes a processor 107, a battery 108, a charging control module 109, a wireless charging control module 110, a matching circuit 111, and a wireless charging coil 112.

In this embodiment of this application, an example in which the first electronic device 113 wirelessly charges the second electronic device 114 is used for description. The first electronic device 113 is used as an end that provides a power in a wireless charging process, and is referred to as a wireless charging transmit end (Tx). The second electronic device 114 is used as an end that receives the power in the wireless charging process, and is referred to as a wireless charging receive end (Rx). Therefore, as shown in FIG. 1, the wireless charging coil 106 in the first electronic device 113 may be referred to as a wireless charging transmit coil, and the wireless charging coil 112 in the second electronic device 114 may be referred to as a wireless charging receive coil.

After a reverse wireless charging (that is, as a charging device, the first electronic device 113 outputs wireless charging electric energy) function of the first electronic device 113 is enabled, the processor 101 of the first electronic device 113 may control the charging control module 103 to receive an input of the battery 102, and input a direct current signal to the wireless charging control module 104. The wireless charging control module 104 may convert the direct current signal into an alternating current signal, and then input the alternating current signal to the wireless charging coil 106 by using the matching circuit 105. The wireless charging coil 106 may generate an alternating electromagnetic field in response to the alternating current signal. The matching circuit 105 includes a capacitor combination. The matching circuit 105 is configured to form LC resonance with the wireless charging coil 106, to improve transmission efficiency of the wireless charging coil 106.

The wireless charging coil 112 of the second electronic device 114 is coupled to the wireless charging coil 106 of the first electronic device 113. The wireless charging coil 112 performs induction to the alternating electromagnetic field emitted by the wireless charging coil 106, and may generate an alternating current signal and then input the alternating current signal to the wireless charging control module 110 through the matching circuit 111. The wireless charging control module 110 may rectify the alternating current signal into a direct current signal, and input the direct current signal to the charging control module 109. The charging control module 109 may charge the battery 108 based on the direct current signal. The matching circuit 111 is configured to form LC resonance with the wireless charging coil 112, to improve receiving efficiency of the wireless charging coil 112.

It should be noted that FIG. 1 merely shows a diagram of a structure of a wireless charging circuit. The structure of the wireless charging circuit of the first electronic device and the second electronic device in this embodiment of this application includes but is not limited to the structure shown in FIG. 1. For example, functions of the charging control module 103 and the wireless charging control module 104 shown in FIG. 1 may be integrated into a charging management module to be implemented. In addition, charging circuit structures of the first electronic device 113 and the second electronic device 114 may be different. For example, the charging control module 103 may include a boost converter (also referred to as a step-up converter, which is a single-tube non-isolated direct current converter whose output voltage is higher than an input voltage), and is configured to step up a voltage of an input direct current signal and output a processed signal to the wireless charging control module 104. For example, the charging control module 109 may include a power management IC (Power Management IC, PMIC). The PMIC has high integration, integrates a step-down converter (buck converter, which is a single-transistor non-isolated direct current converter with an output voltage less than an input voltage, and may step down a voltage of an input direct current signal and output a processed signal to the battery 108) and a low-dropout regulator (Low-dropout regulator, LDO), and further has a protection circuit, such as an over-voltage protection (Over Voltage Protection, OVP) circuit, an under-voltage protection (Under Voltage Protection, UVP) circuit, an over-temperature protection (Over Temperature Protection, OTP) circuit, and an over-current protection (Over Current Protection, OCP) circuit, to ensure security and stability of a power system. For example, the charging control module 103 and/or the charging control module 109 may further include a switched capacitor (switched capacitor, SC) converter. The SC converter is a DC-DC conversion circuit, may implement a voltage step-down output or a voltage step-up output by adjusting control logic, and may implement multiple conversion between an input voltage and an output voltage.

Certainly, the first electronic device 113 may also support a forward wireless charging (that is, as a charged device, the first electronic device 113 receives a wireless charging electric energy input) function, that is, the first electronic device 113 may also receive a wireless charging input of another device by using the wireless charging coil 106. For a forward wireless charging principle of the first electronic device 113, refer to a wireless charging principle of the second electronic device 114 in a process in which the first electronic device 113 wirelessly charges the second electronic device 114. In addition, the first electronic device 113 and the second electronic device 114 may also support wired charging.

A current wireless charging standard includes any standard such as a Qi standard, a power matters alliance (power matters alliance, PMA) standard, or an A4WP standard. The Qi standard is introduced by a wireless power consortium (Wireless Power Consortium, WPC), and the A4WP standard is introduced by a wireless power consortium (Alliance for Wireless Power, A4WP). The Qi and PMA standards use a magnetic induction (magnetic induction) principle to implement wireless charging. The A4WP standard uses a magnetic resonance (magnetic resonance) principle to implement wireless charging. For an electronic product of a different brand and a different model, wireless charging may be performed by using a wireless charging technology of the Qi standard, provided that there is a Qi identifier. All Qi authentication levels include baseline power profile (Baseline Power Profile, BPP) and extended power profile (Extended Power Profile, EPP). Maximum output powers of wireless charging products certified by different types are different. A BPP-certified wireless charging product supports an output power less than or equal to 5 W and uses a BPP wireless charging transmit coil. A BPP-certified wireless charging product supports an output power of 5 W to 15 W and uses an EPP wireless charging transmit coil. Common BPP wireless charging transmit coils are A11 (single-coil) and A28 (multi-coil). Common EPP wireless charging transmit coils include MP-A2 (single coil) and MP-A9 (multi-coil). For different coil models, all coils whose models start with MP are EPP wireless charging transmit coils, represented as MP-Ax or MP-Bx, for example, MP-A2. All coils whose models start with A or B are BPP wireless charging transmit coils, represented as Ax or Bx, for example, A11.

A wireless charger that conforms to the wireless charging standard, briefly referred to as a standard wireless charger, has limitations on a coil size, an inductance, and a power range of a wireless charging coil. Generally, the inductance of the wireless charging coil used by the standard wireless charger is large. For example, for an A11 wireless charger that conforms to the Qi standard, an A11 wireless charging transmit coil is used, and a working frequency range is [110, 205] kHz. When a working frequency range is [110, 205) kHz, a duty cycle is 50%. When a working frequency is equal to 205 kHz, a duty cycle ranges between 10% and 50%. A voltage of a direct current signal of an input wireless charging control module (namely, a full-bridge inverter in an output wireless charging control module) is 5±5% V Within the working frequency range, an inductance of the A11 wireless charging transmit coil is 6.3±10% µH (µH). For another example, for an MP-A2 wireless charger that conforms to the Qi standard, an MP-A2 wireless charging transmit coil is used, and a working frequency range is [110, 145] kHz. When a working frequency range is [110, 145) kHz, a duty cycle ranges from 40% to 50%. When a working frequency is 145 kHz, a duty cycle ranges from 5% to 50%. A voltage of a direct current signal of an input wireless charging control module (namely, a full-bridge inverter in an output wireless charging control module) is 12±1 V Within the working frequency range, an inductance of the MP-A2 wireless charging transmit coil is 10±10% µH (µH).

Wireless charging coils of different manufacturers are designed differently due to limitations of charging specifications and internal space of products. An inductance of a wireless charging coil is directly proportional to a square of a quantity of turns of the wireless charging coil. Therefore, a greater inductance indicates more turns. In a same volume, a quantity of turns of a wireless charging coil that can be implemented is inversely proportional to a wire diameter. When the quantity of turns of the wireless charging coil is larger, the wire diameter that can be used is smaller, direct current impedance R is larger, and a current passing capability is worse. For an electronic device E, when the electronic device E is used as a wireless charging receive end, a current I on a wireless charging coil of the electronic device E needs to be greater when high-power wireless charging is performed on the electronic device E. It can be learned from a loss power formula P=I*I*R that a larger current I on the wireless charging coil indicates a larger loss caused by direct current impedance R of the wireless charging coil. Consequently, the wireless charging coil generates much heat.

To resolve a problem of heat generation and current flow, an electronic device that supports high-power forward wireless charging generally selects a thick wireless charging coil to reduce impedance. In this way, due to a limitation of internal space of a product, a quantity of turns of the wireless charging coil needs to be reduced, to reduce impedance of the wireless charging coil, thereby reducing heat generated by the wireless charging coil. However, after the quantity of turns of the wireless charging coil decreases, an inductance of the wireless charging coil decreases accordingly. Therefore, when the electronic device is used as a wireless charging transmit end to perform reverse wireless charging, the inductance of the wireless charging coil of the electronic device is small and cannot meet a requirement of the standard wireless charger for an inductance of a wireless charging coil. For example, the inductance of the wireless charging coil in the standard wireless charger is 8 µH, but the inductance of the wireless charging coil in the electronic device E is only 3.5 µH. The wireless charging coil in the electronic device E has the small inductance, and a coupling degree between the wireless charging coil in the electronic device E and a wireless charging coil at a wireless charging receive end is low. Therefore, compared with the standard wireless charger, under a same parameter condition (for example, a power supply and a working frequency), less energy can be provided to the wireless charging receive end, and there may be a problem of insufficient reverse charging energy. As a result, there are frequent start and stop during charging, and the wireless charging receive end cannot be stably charged.

In an application scenario, the first electronic device has a forward wireless charging function and a reverse wireless charging function, and the second electronic device has a forward wireless charging function. The first electronic device may be used as a wireless charging transmit end to wirelessly charge the second electronic device. However, due to a small inductance (for example, the inductance is less than a preset inductance threshold) of the first electronic device that supports forward wireless charging, there may be a problem of insufficient reverse charging energy when the second electronic device is wirelessly charged.

For this scenario, embodiments of this application provide a wireless charging control method. The method is applied to a first electronic device and used for wirelessly charging a second electronic device by the first electronic device. An inductance of a wireless charging coil of the first electronic device is less than a preset inductance threshold. The method may include: The first electronic device detects the second electronic device. After the second electronic device is detected, the first electronic device propagates a first alternating electromagnetic field to the second electronic device by using the wireless charging coil, to wirelessly charge the second electronic device. The first alternating electromagnetic field is generated by induction of the wireless charging coil to a first alternating current signal. A working frequency of the first alternating current signal is a first working frequency, and a duty cycle of the first alternating current signal is a first duty cycle; the first working frequency is less than a preset working frequency, and the first duty cycle is greater than or equal to a preset duty cycle, or the first working frequency is equal to a preset working frequency, and the first duty cycle is greater than a preset duty cycle; and a power of a preset alternating current signal corresponding to the preset working frequency and the preset duty cycle meets a wireless charging standard.

In the foregoing technical solution, an alternating current signal applied to the wireless charging coil of the first electronic device is set as the first alternating current signal. The working frequency of the first alternating current signal is the first working frequency, and the duty cycle of the first alternating current signal is the first duty cycle. The first working frequency is less than the preset working frequency, and the first duty cycle is greater than or equal to the preset duty cycle, or the first working frequency is equal to the preset working frequency, and the first duty cycle is greater than the preset duty cycle. In addition, the power of the preset alternating current signal corresponding to the preset working frequency and the preset duty cycle meets the wireless charging standard. In this way, based on the preset alternating current signal whose power meets the wireless charging standard, a power of the alternating current signal applied to the wireless charging coil is increased through reducing the working frequency of the alternating current signal and/or increasing the duty cycle of the alternating current signal, so that the wireless charging coil of the first electronic device can output more energy to charge the second electronic device. This avoids a problem that reverse charging energy is insufficient due to the small inductance of the wireless charging coil of the first electronic device, and the second electronic device cannot be stably charged.

For example, the first electronic device in this embodiment of this application may be a device that supports reverse wireless charging, such as a mobile phone, a tablet computer, or a wearable device (such as a smart watch or a smart band). The second electronic device in this embodiment of this application may be a device that supports forward wireless charging, such as a mobile phone, a tablet computer, or a wearable device (such as a smart watch or a smart band). A specific form of the electronic device is not specifically limited in this embodiment of this application.

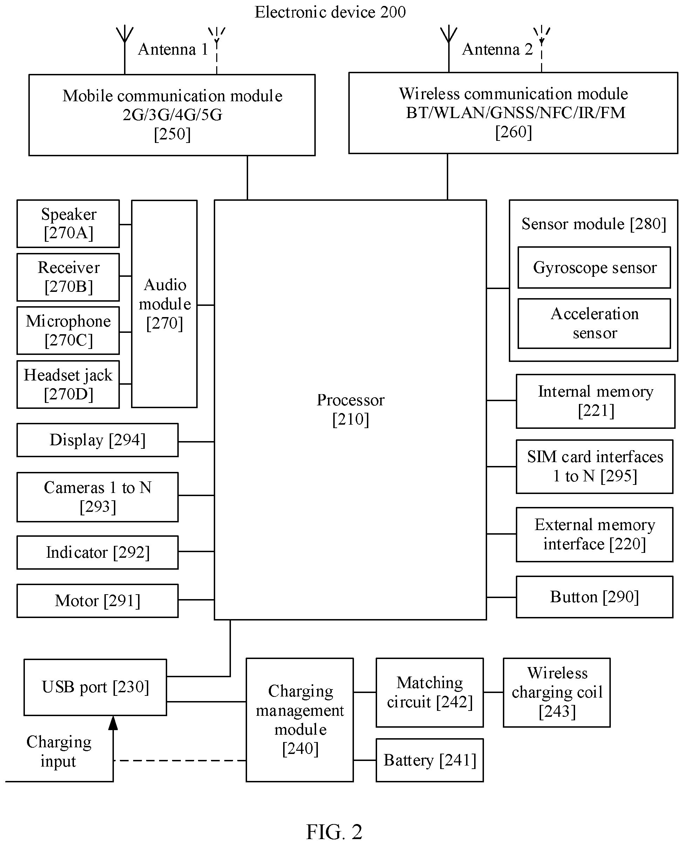

In this embodiment of this application, that the electronic device is a mobile phone is used as an example to describe a hardware structure of the electronic device. Refer to FIG. 2. FIG. 2 is a diagram of a structure of an electronic device 200 according to an embodiment of this application. As shown in FIG. 2, the electronic device 200 may include a processor 210, an external memory interface 220, an internal memory 221, a universal serial bus (universal serial bus, USB) port 230, a charging management module 240, a battery 241, an antenna 1, an antenna 2, a mobile communication module 250, a wireless communication module 260, an audio module 270, a speaker 270A, a receiver 270B, a microphone 270C, a headset jack 270D, a sensor module 280, a button 190, a motor 191, an indicator 292, a camera 293, a display 294, and a subscriber identification module (subscriber identification module, SIM) card interface 295.

The sensor module may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

The first electronic device 113 shown in FIG. 1 may use the structure of the electronic device 200 shown in FIG. 2. When the electronic device 200 is the first electronic device 113, the processor 210 shown in FIG. 2 is the processor 101 of the first electronic device 113, the battery 241 is the battery 102 of the first electronic device 113, the charging management module 240 may include the charging control module 103 and the wireless charging control module 104 of the first electronic device 113 (that is, functions of the charging control module 103 and the wireless charging control module 104 may be integrated into the charging management module 240 to be implemented), the wireless charging coil 243 is the wireless charging coil 106 of the first electronic device 113, and the matching circuit 242 is the matching circuit 105 of the first electronic device 113.

The second electronic device 114 shown in FIG. 1 may also use the structure of the electronic device 200 shown in FIG. 2. When the electronic device 200 is the second electronic device 114, the processor 210 shown in FIG. 2 is the processor 107 of the second electronic device 114, the battery 241 is the battery 108 of the second electronic device 114, the charging management module 240 may include the charging control module 109 and the wireless charging control module 110 of the second electronic device 114 (that is, functions of the charging control module 109 and the wireless charging control module 110 may be integrated into the charging management module 240 to be implemented), the wireless charging coil 243 is the wireless charging coil 112 of the second electronic device 114, and the matching circuit 242 is the matching circuit 111 of the second electronic device 114.

It may be understood that the structure shown in this embodiment does not constitute a specific limitation on the electronic device 200. In some other embodiments, the electronic device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a neural center and a command center of the electronic device 200. The controller may generate an operation control signal based on an instruction operation code and a time sequence signal, to control instruction reading and instruction execution.

A memory may be further disposed in the processor 210, and is configured to store instructions and data. In some embodiments, the memory in the processor 210 is a cache. The memory may store instructions or data that has been recently used or cyclically used by the processor 210. If the processor 210 needs to use the instructions or the data again, the instructions or the data may be directly invoked from the memory. This avoids repeated access and reduces waiting time of the processor 210, thereby improving system efficiency.

It may be understood that an interface connection relationship between the modules shown in this embodiment is merely an example for description, and does not constitute a limitation on the structure of the electronic device 200. In some other embodiments, the electronic device 200 may alternatively use an interface connection manner different from those in the foregoing embodiments, or use a combination of a plurality of interface connection manners.

The charging management module 240 is configured to receive a charging input from a charger. The charger may be a wireless charger (for example, a wireless charging base of the electronic device 200 or another device that may wirelessly charge the electronic device 200), or may be a wired charger.

In some embodiments, the electronic device 200 may support wired charging. Specifically, the charging management module 240 may receive a charging input of the wired charger by using the USB port 230.

In some other embodiments, the electronic device 200 may support forward wireless charging. The charging management module 240 may receive a wireless charging input by using the wireless charging coil 243 of the electronic device. Specifically, the charging management module 240 is connected to the wireless charging coil 243 through the matching circuit 242. The wireless charging coil 243 may be coupled to a wireless charging coil of the wireless charger to perform induction to an alternating electromagnetic field emitted by the wireless charging coil of the wireless charger, to generate an alternating current signal. The alternating current signal generated by the wireless charging coil 243 is transmitted to the charging management module 240 through the matching circuit 242, to wirelessly charge the battery 241.

When charging the battery 241, the charging management module 240 may further supply power to the electronic device. The charging management module 240 receives an input of the battery 241 and supplies power to the processor 210, the internal memory 221, an external memory, the display 294, the camera 293, the wireless communication module 260, and the like. The charging management module 240 may be further configured to monitor parameters such as a battery capacity of the battery 241, a battery cycle count, and a battery health status (electricity leakage or impedance). In some other embodiments, the charging management module 240 may alternatively be disposed in the processor 210.

In some other embodiments, the electronic device 200 may support reverse wireless charging. Specifically, the charging management module 240 may alternatively receive an input of the battery 241, and convert, into an alternating current signal, a direct current signal input by the battery 241. The alternating current signal is transmitted to the wireless charging coil 243 through the matching circuit 242. The wireless charging coil 243 may generate an alternating electromagnetic field when receiving the alternating current signal. A wireless charging coil of another electronic device performs induction to the alternating electromagnetic field, and wireless charging may be performed. That is, the electronic device 200 may alternatively wirelessly charge the another electronic device.

For detailed descriptions of wired charging, forward wireless charging, and reverse wireless charging performed by the electronic device 200, refer to descriptions of the principle of wireless charging based on FIG. 1 in embodiments of this application. Details are not described herein again.

A wireless communication function of the electronic device 200 may be implemented by using the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device 200 may be configured to cover one or more communication frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communication module 250 may provide a wireless communication solution that is applied to the electronic device 200 and that includes 2G/3G/4G/5G or the like. In this embodiment of this application, the antenna 1 of the electronic device 200 is coupled to the mobile communication module 250, so that the electronic device 200 can perform wireless communication by using a mobile cellular network.

The wireless communication module 260 may provide a wireless communication solution that is applied to the electronic device 200 and that includes a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), near field communication (near field communication, NFC) technology, an infrared (infrared, IR) technology, and the like. In this embodiment of this application, the antenna 2 of the electronic device 200 is coupled to the wireless communication module 260, so that the electronic device 200 may perform wireless communication by using a Wi-Fi network.

The electronic device 200 implements a display function by using the GPU, the display 294, the application processor, and the like. The GPU is a microprocessor for image processing and is connected to the display 294 and the application processor. The GPU is configured to perform mathematical and geometric computation for graphic rendering. The processor 210 may include one or more GPUs that execute program instructions to generate or change display information.

The electronic device 200 may implement a photographing function by using the ISP, the camera 293, the video codec, the GPU, the display 294, the application processor, and the like. The external memory interface 220 may be configured to connect to an external storage card, for example, a micro SD card, to extend a storage capability of the electronic device 200. The external storage card communicates with the processor 210 through the external memory interface 220, to implement a data storage function. For example, files such as music and videos are stored in the external storage card.

The internal memory 221 may be configured to store computer-executable program code. The executable program code includes instructions. The processor 210 runs the instructions stored in the internal memory 221, to perform various functional applications of the electronic device 200 and data processing. For example, in this embodiment of this application, the processor 210 may execute the instructions stored in the internal memory 221, and the internal memory 221 may include a program storage area and a data storage area.

The electronic device 200 may implement an audio function such as music playing and recording, by using the audio module 270, the speaker 270A, the receiver 270B, the microphone 270C, the headset jack 270D, the application processor, and the like.

The gyroscope sensor may be configured to determine a motion posture of the electronic device 200. The acceleration sensor may detect magnitudes of accelerations of the electronic device 200 in various directions (generally along three axes). When the electronic device 200 is still, a magnitude and a direction of gravity may be detected. The acceleration sensor may be further configured to identify a posture of the electronic device, and is used in screen switching between a landscape mode and a portrait mode, a pedometer, or another application.

The button 190 includes a power button, a volume button, and the like. The button 190 may be a mechanical button, or may be a touch button. The electronic device 200 may receive a button input, and generate a button signal input related to a user setting and function control of the electronic device 200. The motor 191 may generate a vibration prompt. The motor 191 may be configured to provide an incoming call vibration prompt or a touch vibration feedback. The indicator 292 may be an indicator light, and may be configured to indicate a charging status and a power change, or may be configured to indicate a message, a missed call, a notification, and the like. The SIM card interface 295 is configured to connect to a SIM card. The SIM card interface 295 may support a nano-SIM card, a micro-SIM card, a SIM card, and the like.

All methods in the following embodiments may be implemented in an electronic device 200 having the foregoing hardware structure. The following describes embodiments of this application in detail with reference to accompanying drawings.

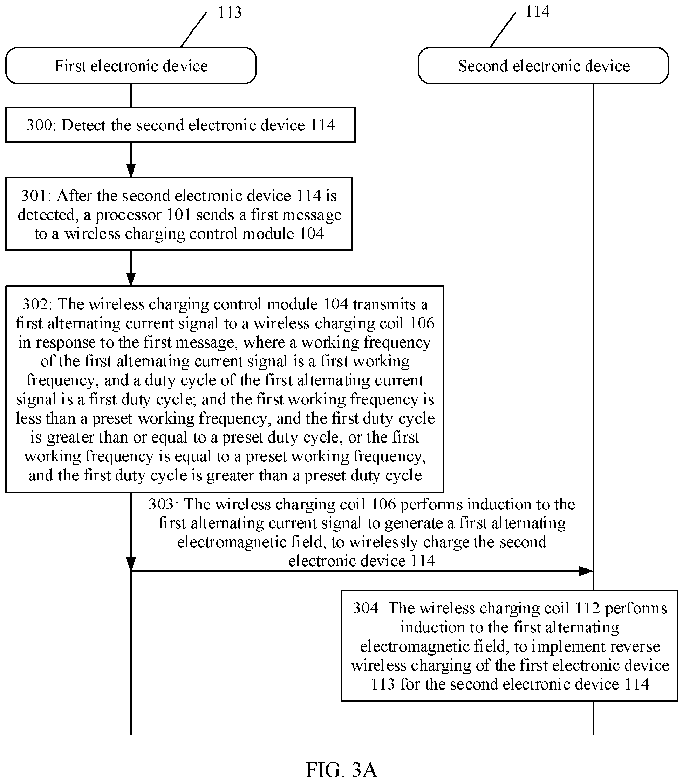

This embodiment provides a wireless charging control method. In this embodiment, a first electronic device enables a reverse wireless charging function, to wirelessly charge a second electronic device. For example, the first electronic device is the first electronic device 113 shown in FIG. 1, and the second electronic device is the second electronic device 114 shown in FIG. 1. Refer to FIG. 3A. FIG. 3A is a flowchart of interaction between a first electronic device and a second electronic device according to an embodiment of this application. An inductance of the wireless charging coil 106 of the first electronic device 113 is less than a preset inductance threshold. As shown in FIG. 3A, a wireless charging control method provided in this embodiment includes a charging preparation stage and an actual charging stage. The charging preparation stage may include step 300, and the actual charging stage may include step 301 to step 303.

Step 300: The first electronic device 113 detects the second electronic device 114.

For example, the first electronic device 113 may detect the second electronic device 114 by using the wireless charging coil 106. Specifically, the processor 101 of the first electronic device 113 may detect the second electronic device 114 by using the wireless charging coil 106.

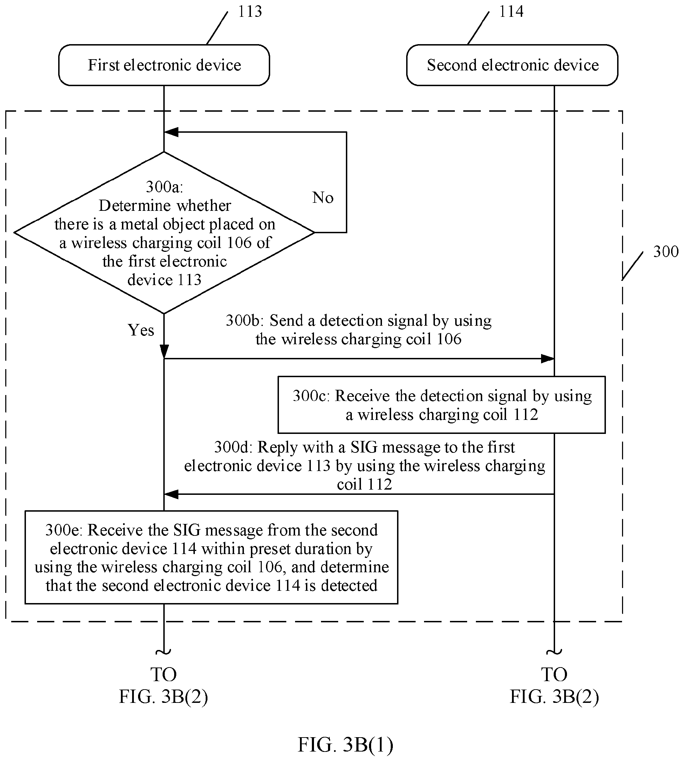

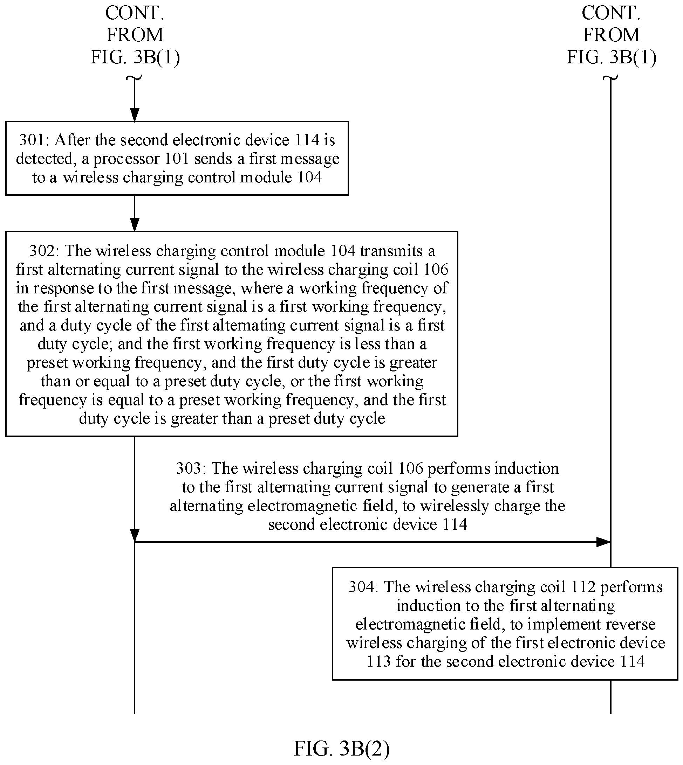

As shown in FIG. 3B(1) and FIG. 3B(2), for example, the processor 101 of the first electronic device 113 detects the second electronic device 114 by using the wireless charging coil 106. Step 300 may include steps 300a to 300e.

Step 300a: The first electronic device 113 determines whether there is a metal object placed on the wireless charging coil 106 of the first electronic device 113.

For example, the wireless charging control module 104 of the first electronic device 113 may be coupled to the matching circuit 105. If there is the metal object placed on the wireless charging coil 106 of the first electronic device 113, the first electronic device 113 may detect that a voltage between two ends of a capacitor in the matching circuit 105 changes. The metal object may be the wireless charging coil 112 of the second electronic device 114, or may be another metal foreign object. For example, the metal foreign object may be a coin.

Specifically, if the first electronic device 113 determines that there is the metal object placed on the wireless charging coil 106 of the first electronic device 113, the first electronic device 113 may perform step 300b. If the first electronic device 113 determines that there is no metal object placed on the wireless charging coil 106 of the first electronic device 113, the first electronic device continues to perform step 300a.

Step 300b: The processor 101 of the first electronic device 113 sends a detection signal (for example, a Ping message) by using the wireless charging coil 106.

The metal object may be the wireless charging coil 112 of the second electronic device 114, or may be another metal foreign object. The detection signal may be used to identify whether the metal object is the wireless charging coil 112 of the second electronic device 114 or the metal foreign object. If the metal object is the wireless charging coil 112 of the second electronic device 114, the second electronic device 114 may replay with a response message of the detection signal to the first electronic device 113 in response to the detection signal of the first electronic device 113, for example, a signal strength (Signal Strength, SIG) message. The SIG message is used to respond to the detection signal of the first electronic device. If the metal object is the metal foreign object, the first electronic device 113 does not receive the response message of the detection signal.

In an application scenario, the first electronic device enables the reverse wireless charging function, and may wirelessly charge the second electronic device. However, the wireless charging coil 106 of the first electronic device 113 is a coil with a small inductance (for example, the inductance of the wireless charging coil 106 is less than the preset inductance threshold), and coupling between the wireless charging coil 106 and the wireless charging coil 112 of the second electronic device 114 is weak. In addition, the second electronic device 114 is in a power-off state. In this scenario, if the second electronic device 114 in the power-off state cannot communicate with the first electronic device 113, a response message of the detection signal cannot be replied to the first electronic device 113. The first electronic device does not receive the response message of the detection signal, that is, fails in detection, and therefore the first electronic device does not charge the second electronic device.

For this scenario, this application provides an embodiment. In the foregoing step 300b, a working frequency of the detection signal is set as a preset working frequency, and a duty cycle of the detection signal is set as a preset duty cycle. A power of the detection signal corresponding to the preset working frequency and the preset duty cycle meets a wireless charging standard.

It should be understood that a voltage of the detection signal is within a voltage range of an alternating current signal applied by a standard wireless charger to a wireless charging coil of the standard wireless charger.

It should be understood that the wireless charging standard specifies a power range of a power output when the standard wireless charger wirelessly charges another electronic device. An inductance of the wireless charging coil of the standard wireless charger is greater than or equal to the preset inductance threshold.

According to the foregoing embodiment, in a detection stage (for example, a Ping stage), the working frequency of the detection signal is set as the preset working frequency, and the duty cycle of the detection signal is set as the preset duty cycle, so that the power of the detection signal meets the wireless charging standard. In this way, the detection signal transmitted by the first electronic device may carry enough energy, and the energy is transmitted to the second electronic device. Even in a scenario in which the second electronic device 114 is in the power-off state, the second electronic device 114 can activate the wireless charging control module 110 of the second electronic device 114 by receiving the energy transmitted by using the detection signal of the first electronic device, to enable a communication function of the second electronic device 114, so that the second electronic device 114 can reply with the response message of the detection signal to the first electronic device 113. In this way, the first electronic device can receive the response message of the detection signal (that is, detection succeeds), and further charge the second electronic device.

In some embodiments, simulation calculation is performed on the first electronic device 113 in advance. Based on a simulation calculation result, a plurality of optional preset parameter groups of reverse wireless charging performed by the first electronic device 113 are obtained. Each preset parameter group includes one frequency value and one duty cycle value, and corresponds to a different alternating current signal. A power of an alternating current signal corresponding to each preset parameter group meets the wireless charging standard. In the foregoing step 300b, the working frequency of the detection signal is set as the preset working frequency, and the duty cycle of the detection signal is set as the preset duty cycle. One parameter group may be selected from the plurality of preset parameter groups, and a frequency value and a duty cycle value in the preset parameter group are used as the preset working frequency and the preset duty cycle.

For example, information of the plurality of optional preset parameter groups is stored in a format shown in Table 1.

**Table 1**

| | Frequency value | Duty cycle value |
|---|---|---|
| Preset parameter group 1 | f1 | d1 |
| Preset parameter group 2 | f2 | d2 |
| Preset parameter group 3 | f3 | d3 |
| Preset parameter group 4 | f4 | d4 |
| Preset parameter group 5 | f5 | d5 |

In some embodiments, the inductance of the wireless charging coil 106 is 3.5 µH, the preset working frequency is 135 kHz, and the preset duty cycle is 50%.

Step 300c: The second electronic device 114 receives the detection signal by using the wireless charging coil 112.

Step 300d: The second electronic device 114 replies with the SIG message to the first electronic device 113 by using the wireless charging coil 112.

The SIG message may indicate whether the wireless charging coil 112 of the second electronic device 114 and the wireless charging coil 106 of the first electronic device 113 are correctly placed.

Step 300e: The first electronic device 113 receives the SIG message from the second electronic device 114 within preset duration by using the wireless charging coil 106, and determines that the second electronic device 114 is detected.

After step 300, the first electronic device 113 has detected the second electronic device 114, and then can start to wirelessly charge the second electronic device 114. Specifically, after detecting the second electronic device 114, the first electronic device 113 may propagate an alternating electromagnetic field (such as a first alternating electromagnetic field) to the second electronic device 114 by using the wireless charging coil 106, to wirelessly charge the second electronic device 114. For example, a specific manner used by the first electronic device 113 to wirelessly charge the second electronic device 114 may include step 301 to step 304.

Step 301: The processor 101 of the first electronic device 113 sends a first message to the wireless charging control module 104.

Step 302: The wireless charging control module 104 transmits a first alternating current signal to the wireless charging coil 106 in response to the first message. A working frequency of the first alternating current signal is a first working frequency, and a duty cycle of the first alternating current signal is a first duty cycle. The first working frequency is less than the preset working frequency and the first duty cycle is greater than or equal to the preset duty cycle, or the first working frequency is equal to the preset working frequency and the first duty cycle is greater than the preset duty cycle. A power of a preset alternating current signal corresponding to the preset working frequency and the preset duty cycle meets the wireless charging standard.

The preset alternating current signal may be the detection signal in step 300b. It should be understood that a voltage of the first alternating current signal is equal to a voltage of the preset alternating current signal. The voltage of the preset alternating current signal is within a voltage range of the alternating current signal output by the standard wireless charger to the wireless charging coil of the standard wireless charger.

Step 303: The wireless charging coil 106 performs induction to the first alternating current signal to generate a first alternating electromagnetic field, to wirelessly charge the second electronic device 114.

Step 304: The wireless charging coil 112 of the second electronic device 114 performs induction to the first alternating electromagnetic field, to implement reverse wireless charging of the first electronic device 113 for the second electronic device 114.

In an application scenario, the first electronic device 113 may be used as a wireless charging transmit end to wirelessly charge the second electronic device. However, both the wireless charging coil 106 of the first electronic device 113 and the wireless charging coil 112 of the second electronic device 114 are coils with small inductances (for example, inductances of the wireless charging coil 106 and the wireless charging coil 112 each are less than the preset inductance threshold). In this scenario, because the inductance of the wireless charging coil 112 of the second electronic device 114 is small, a coupling degree between the wireless charging coil 112 and the wireless charging coil 106 of the first electronic device 113 is low, and an energy receiving capability is weak. There may be problems that charging cannot be normally performed, power-on cannot be implemented, power cannot be supplied to a load, and the like because the second electronic device 114 has insufficient energy at startup and an output voltage of the wireless charging control module 110 drops due to an instantaneous load surge. Before charging the second electronic device, the first electronic device 113 does not know a type of the second electronic device 114, and does not know that the wireless charging coil 112 of the second electronic device 114 is a coil with a small inductance.

For this application scenario, this application provides some other embodiments. In these embodiments, after the first electronic device 113 detects the second electronic device 114, before the first electronic device 113 and the second electronic device 114 enter a power transmission stage, the second electronic device 114 may send an indication message to the first electronic device 113, where the indication message includes a maximum voltage supported by the second electronic device 114 for wireless charging. The first electronic device 113 receives the indication message from the second electronic device 114 by using the wireless charging coil 106, adjusts, based on the maximum voltage that is supported by the second electronic device 114 for wireless charging and that is included in the indication message, an alternating current signal applied to the wireless charging coil 106, to generate a corresponding alternating electromagnetic field and propagate the alternating current electromagnetic field to the second electronic device 114, to wirelessly charge the second electronic device 114.

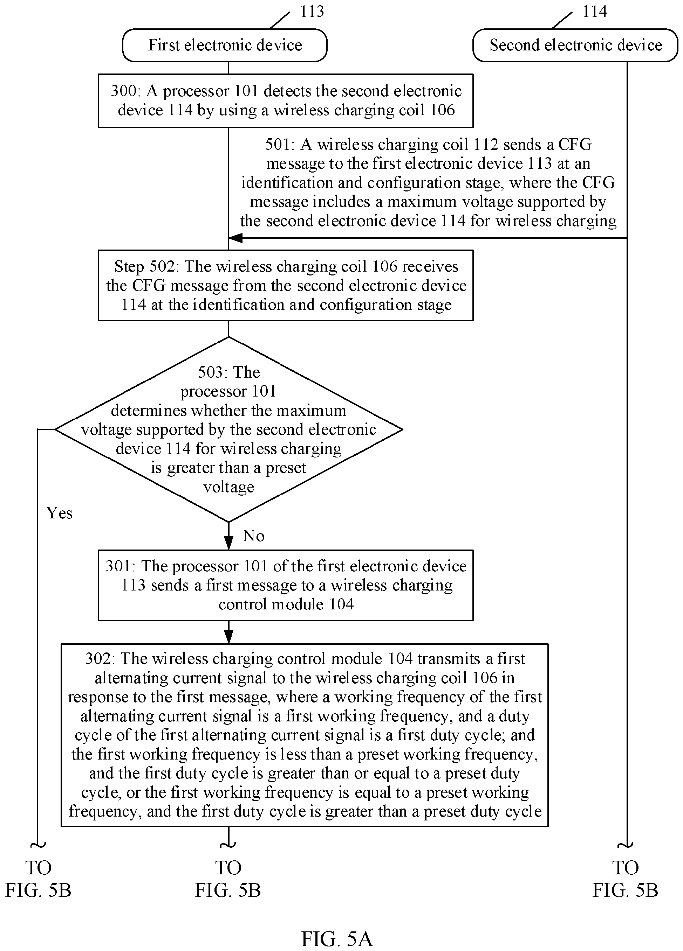

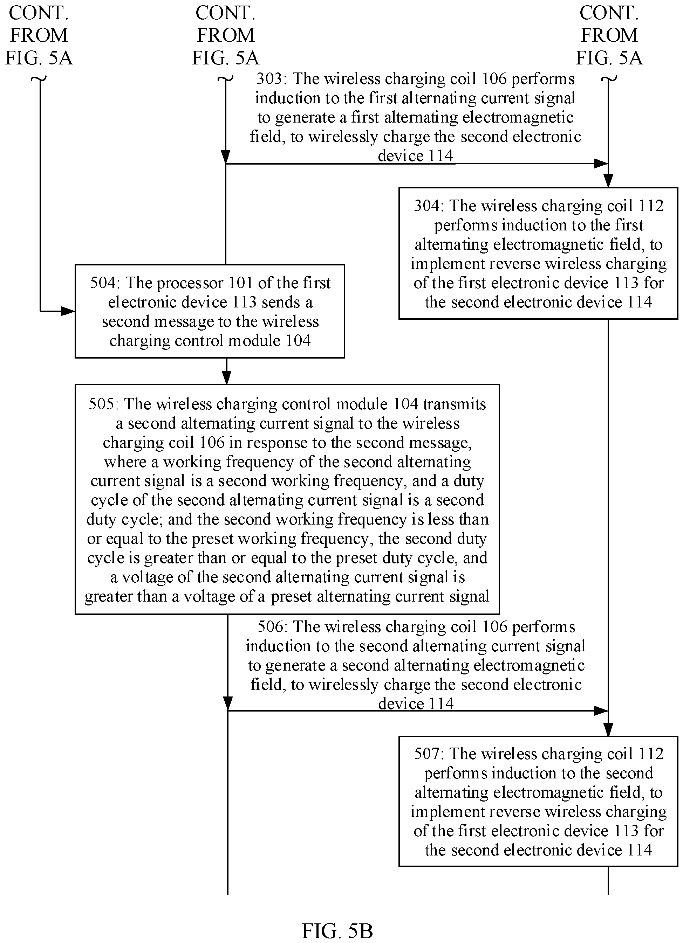

For example, the indication message may be a configuration (Configuration, CFG) message. For example, in an identification and configuration (Identification & Configuration) stage, the second electronic device 114 may send the CFG message to the first electronic device 113, to indicate, by using the CFG message, the maximum voltage supported by the second electronic device 114 for wireless charging. In the foregoing step 300e, the first electronic device 113 receives the SIG message from the second electronic device 114 within the preset duration by using the wireless charging coil 106, so that the first electronic device 113 and the second electronic device 114 enter the identification and configuration stage. As shown in FIG. 5A and FIG. 5B, the method may further include step 501 to step 507.

Step 501: The wireless charging coil 112 of the second electronic device 114 sends the CFG message to the first electronic device 113 at the identification and configuration stage. The CFG message includes the maximum voltage supported by the second electronic device 114 for wireless charging.

In this way, the second electronic device 114 may send the CFG message that includes the maximum voltage supported by the second electronic device 114 for wireless charging, to notify the first electronic device 113 that the second electronic device 114 has the wireless charging coil 112 with a small inductance and requires more energy, and the first electronic device 113 may adjust, based on the maximum voltage that is supported by the second electronic device 114 for wireless charging and that is included in the CFG message, a parameter of the alternating current signal transmitted to the wireless charging coil 106, to provide more energy for the second electronic device 114.

Step 502: The wireless charging coil 106 of the first electronic device 113 receives the CFG message from the second electronic device 114 at the identification and configuration stage.

Step 503: The processor 101 of the first electronic device 113 determines whether the maximum voltage supported by the second electronic device 114 for wireless charging is greater than a preset voltage.

After step 503, if the maximum voltage supported by the second electronic device 114 for wireless charging is less than or equal to the preset voltage, step 301 may be performed.

It should be understood that, when the first electronic device 113 does not know the type of the second electronic device 114, that is, when the first electronic device 113 does not know the maximum voltage supported by the second electronic device 114 for forward wireless charging, the first electronic device 113 does not know whether the second electronic device 114 supports high-voltage forward wireless charging. Therefore, the voltage of the preset alternating current signal needs to be limited within the voltage range of the alternating current signal output by the standard wireless charger to the wireless charging coil of the standard wireless charger. The voltage of the preset alternating current signal cannot exceed the voltage range of the alternating current signal output by the standard wireless charger to the wireless charging coil of the standard wireless charger, to prevent an overvoltage and avoid damage to the first electronic device 113. To be specific, in step 301, the processor of the first electronic device 113 sends the first message to the wireless charging control module, so that the wireless charging control module transmits the first alternating current signal to the wireless charging coil 106. To be specific, based on the preset alternating current signal, the power of the alternating current signal transmitted to the wireless charging coil 106 is increased in a manner of keeping the voltage unchanged and only reducing the working frequency and/or increasing the duty cycle.

After step 503, if the maximum voltage supported by the second electronic device 114 for wireless charging is greater than the preset voltage threshold, the first electronic device may propagate a second alternating electromagnetic field to the second electronic device by using the wireless charging coil, to wirelessly charge the second electronic device. For example, a specific manner used for wirelessly charging the second electronic device 114 by the first electronic device 113 may include step 504.

Step 504: The processor 101 of the first electronic device 113 sends a second message to the wireless charging control module 104.

Step 505: The wireless charging control module 104 transmits a second alternating current signal to the wireless charging coil 106 in response to the second message. A working frequency of the second alternating current signal is a second working frequency, and a duty cycle of the second alternating current signal is a second duty cycle. The second working frequency is less than or equal to the preset working frequency, the second duty cycle is greater than or equal to the preset duty cycle, and a voltage of the second alternating current signal is greater than a voltage of the preset alternating current signal.

Step 506: The wireless charging coil 106 performs induction to the second alternating current signal to generate a second alternating electromagnetic field, to wirelessly charge the second electronic device 114.

Step 507: The wireless charging coil 112 of the second electronic device 114 performs induction to the second alternating electromagnetic field, to implement wireless charging of the first electronic device 113 for the second electronic device 114.

For example, the indication message may alternatively be a user-defined message (for example, a command CMD), and the CMD includes the maximum voltage supported by the second electronic device 114 for wireless charging. For example, after the identification and configuration stage ends, the second electronic device 114 may send the CMD to the first electronic device 113 before a power transmission stage, to indicate, by using the CMD, the maximum voltage supported by the second electronic device 114 for wireless charging.

In this way, the second electronic device 114 may send the CMD that includes the maximum voltage supported by the second electronic device 114 for wireless charging, to notify the first electronic device 113 that the second electronic device 114 requires more energy, and the first electronic device 113 may adjust, based on the maximum voltage that is supported by the second electronic device 114 for wireless charging and that is included in the CMD, a parameter of the alternating current signal transmitted to the wireless charging coil 106, to provide more energy for the second electronic device 114. When the second electronic device 114 sends the CMD to indicate the maximum voltage supported by the second electronic device 114 for wireless charging, the CFG message may not include the maximum voltage supported by the second electronic device 114 for wireless charging. In this implementation, the first electronic device 113 and the second electronic device 114 may interact with each other according to an existing wireless charging standard in the identification and configuration stage, and the CFG message may be configured according to the existing wireless charging standard.

It should be understood that, in the foregoing embodiment, the wireless charging coil 112 of the second electronic device 114 may further send an identification (Identification, ID) to the first electronic device 113 in the identification and configuration stage. The ID message may include identity information such as a product model, a MAC address, a vender identification VID (Vender ID), and a product serial number of the second electronic device 114. The second electronic device 114 sends the ID message to the first electronic device 113, so that the first electronic device 113 can identify the identity information of the second electronic device 114 based on the ID message.

Correspondingly, the wireless charging coil 106 of the first electronic device 113 may further receive the ID message from the second electronic device 114 in the recognition and configuration stage.

It should be understood that, to avoid that power of the first electronic device 113 is consumed due to wireless charging of the first electronic device 113 for another electronic product, the first electronic device 113 may identify the identity information of the second electronic device 114 by using the ID message. If the second electronic device 114 is a preconfigured mobile terminal, the second electronic device 114 may be wirelessly charged. If the second electronic device 114 is not a preconfigured mobile terminal, the first electronic device 113 does not wirelessly charge the second electronic device 114. The first electronic device 113 may compare the identity information of the second electronic device 114 with identity information of the preconfigured mobile terminal, to determine whether the second electronic device 114 is the preconfigured mobile terminal. The identity information of the preconfigured mobile terminal may include identity information such as a product model and a MAC address. It should be noted that the ID message is optional, that is, the second electronic device 114 does not necessarily need to send the ID message to the first electronic device 114, and the first electronic device 113 does not necessarily need to receive the ID message from the second electronic device and determine whether the second electronic device 114 is the preconfigured mobile terminal. In this case, provided that a distance between the first electronic device 113 and the second electronic device 114 is less than a preset distance threshold, the first electronic device 113 may wirelessly charge the second electronic device 114. Correspondingly, in this case, the identification and configuration (Identification & Configuration) stage may also be referred to as a configuration (Configuration) stage. Different wireless charging standard versions have different names for this stage. This is not limited in embodiments of this application.

For example, in the foregoing step 505, an input voltage of the wireless charging control module 104 may be increased, to increase a voltage of an alternating current signal output by the wireless charging control module 104 to the wireless charging coil 106. For example, in the circuit shown in FIG. 1, the charging control module 103 may include a boost converter and an SC converter. When the processor 101 of the first electronic device 113 determines that the second electronic device 114 does not support high-voltage forward wireless charging, the processor 101 of the first electronic device 113 may control the charging control module 103 to output a 5 V voltage to the wireless charging control module 104 by using the boost converter, and send the first message to the wireless charging control module 104, so that the wireless charging control module 104 transmits the first alternating current signal to the wireless charging coil 106, where the voltage of the first alternating current signal is equal to the voltage of the preset alternating current signal. When the second electronic device 114 supports high-voltage forward wireless charging, the processor 101 may control the charging control module 103 to output a voltage (the voltage is greater than 5 V) twice a voltage of the battery 102 to the wireless charging control module 104 by using the SC converter, to increase the input voltage of the wireless charging control module 104, and send the second message to the wireless charging control module 104, so that the wireless charging control module 104 transmits the second alternating current signal to the wireless charging coil 106, where the voltage of the second alternating current signal is greater than the voltage of the preset alternating current signal. That is, the voltage output by the charging control module 103 to the wireless charging control module 104 may be increased, to increase the voltage of the alternating current signal output by the wireless charging control module 104 to the wireless charging coil 106, so that the wireless charging coil 106 carries more energy, to increase energy transmitted to the second electronic device.

In some embodiments, simulation calculation may be performed on the first electronic device 113 in advance. Based on a simulation calculation result, a plurality of optional preset parameter groups of reverse wireless charging performed by the first electronic device 113 are obtained. Each preset parameter group includes one frequency value, one duty cycle value, and one voltage value, and corresponds to a different alternating current signal. A power of an alternating current signal corresponding to each preset parameter group meets the wireless charging standard. In this way, in the foregoing step 302 and step 505, one preset parameter group that meets a corresponding requirement may be selected from the plurality of preset parameter groups, and a frequency value, a duty cycle value, and a voltage value in the preset parameter group are used as the working frequency, the duty cycle, and the voltage of the alternating current signal transmitted to the wireless charging coil 106.

For example, information of the plurality of optional preset parameter groups may be stored in a format shown in Table 2.

**Table 2**

| | Frequency value | Duty cycle value | Voltage value | Power of a corresponding alternating current signal |
|---|---|---|---|---|
| Preset parameter group 1 | f1 | d1 | V1 | P1 |
| Preset parameter group 2 | f2 | d2 | V2 | P2 |
| Preset parameter group 3 | f3 | d3 | V3 | P3 |
| Preset parameter group 4 | f4 | d4 | V4 | P4 |
| Preset parameter group 5 | f5 | d5 | V5 | P5 |

It should be understood that a combination of parameters in the preset parameter group is related to a form, an inductance, and a magnetic material of the designed wireless charging coil. For different wireless charging coils, preset parameter groups are different.

In some embodiments, the inductance of the wireless charging coil 106 is 3.5 µH, the first working frequency is 110 kHz, and the first duty cycle is 60%.

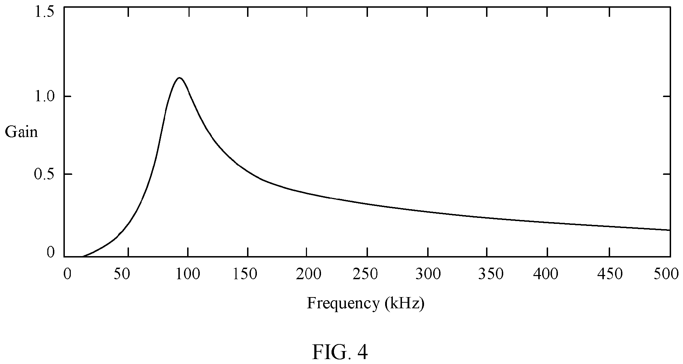

For example, refer to FIG. 4. FIG. 4 shows a curve of a frequency and an output gain of an alternating current signal output by the first electronic device 113 according to an embodiment of this application. The output gain may be a ratio of an input voltage of the wireless charging control module 110 of the second electronic device 114 to an output voltage of the wireless charging control module 104 of the first electronic device 113. A frequency range of wireless charging is generally set as a monotonic range, that is, a frequency range of a descending segment on a right side of an optimal working frequency (namely, a resonance frequency, for example, 100 kHz in FIG. 4) is selected. For example, the frequency range of wireless charging is set as [110 kHz, 200 kHz]. Resonance frequencies of different coils and resonance capacitors are also different. It is assumed that the preset working frequency is 135 kHz. Based on the curve of the frequency and the output gain of the alternating current signal output by the first electronic device shown in FIG. 4, the output gain can be increased through appropriate reducing of the frequency. In addition, the wireless charging coil 106 may also carry more energy through increasing the duty cycle. For example, through measurement, when the wireless charging coil 106 of the first electronic device 113 is a coil with a small inductance, for example, when the inductance is 3.5 µH, the working frequency decreases from 135 kHz to 110 kHz, and the duty cycle increases from 50% to 60%. In this way, the output gain is effectively increased. If a charging power requirement of the second electronic device is small, a charging requirement of the second electronic device can be met through reducing the frequency and increasing the duty cycle.

Based on technical solutions provided in the foregoing embodiment, when the first electronic device 113 does not know the type of the second electronic device 114, the second electronic device 114 transmits, to the first electronic device 113 by using an active request mechanism (interaction mechanism), information of the maximum voltage supported by the second electronic device 114 for forward wireless charging, to notify the first electronic device 113 that the second electronic device 114 has the wireless charging coil 112 with a small inductance and requires more energy, so that the first electronic device 113 increases energy transmitted to the second electronic device 114. The first electronic device 113 may learn, by using the message from the second electronic device 114, the maximum voltage supported by the second electronic device 114 for forward wireless charging, to select an appropriate manner to adjust a parameter (including a working frequency, a duty cycle, and a voltage) of an alternating current signal transmitted by the first electronic device 113 to the wireless charging coil 106, to increase the energy output by the first electronic device 113 to the second electronic device 114, to wirelessly charge the second electronic device 114. According to a solution provided in the foregoing embodiment, the second electronic device 114 may obtain large initial charging energy, so that the first electronic device 113 normally and stably charges the second electronic device 114, to avoid problems that charging cannot be normally performed, power-on cannot be implemented, power cannot be supplied to a load, and the like because the second electronic device 114 has insufficient energy at startup and an output voltage of the wireless charging control module 110 drops due to an instantaneous load surge.

When the maximum voltage supported by the second electronic device 114 for wireless charging is greater than the preset voltage threshold (that is, the second electronic device 114 supports high-voltage forward wireless charging), that is, when it is clear that the voltage transmitted to the second electronic device 114 can be increased, the first electronic device 113 may directly increase the voltage of the alternating current signal transmitted to the wireless charging coil 106. In addition, the first electronic device 113 may further reduce the frequency and/or increase the duty cycle based on a coil parameter, a resonance frequency, a load characteristic, and the like of a product, to increase the power of the alternating current signal transmitted to the wireless charging coil 106 as much as possible, so that the wireless charging coil 106 of the first electronic device 113 can carry more energy, to increase energy transmitted by the first electronic device 113 to the second electronic device 114, to meet a charging requirement of the second electronic device 114 that requires a large charging power and supports a high forward wireless charging voltage, and implement mutual charging between electronic devices whose wireless charging coils are all coils with small inductances.

When the maximum voltage supported by the second electronic device 114 for wireless charging is less than or equal to the preset voltage threshold (that is, the second electronic device 114 does not support high-voltage forward wireless charging), the first electronic device 113 may increase the power of the alternating current signal transmitted to the wireless charging coil 106 through reducing the frequency and/or increasing the duty cycle, and does not increase the power of the alternating current signal through increasing the voltage of the alternating current signal, to avoid a problem that, due to increasing of the power of the alternating current signal, a charging voltage of the second electronic device 114 exceeds the maximum voltage supported by the second electronic device 114 for wireless charging, and the second electronic device 114 is damaged. In addition, when the second electronic device 114 is a device that requires a small charging power, the first electronic device 113 increases, by adjusting the working frequency and the duty cycle of the alternating current signal, the power of the alternating current signal transmitted to the wireless charging coil 106, so that the wireless charging coil 106 of the first electronic device 113 may carry more energy, to increase energy transmitted by the first electronic device 113 to the second electronic device 114, and meet a charging requirement of the second electronic device.

In some embodiments, the first electronic device 113 may preset a plurality of parameter adjustment manner combinations. The parameter adjustment manner combinations may adjust one or more of a frequency, a duty cycle, and a voltage, and respectively correspond to messages from different second electronic devices 114. For example, a specific second electronic device 114 does not support high-voltage forward wireless charging. After the first electronic device 113 determines that the second electronic device 114 does not support high-voltage forward wireless charging, the first device adjusts only a frequency and a duty cycle of an alternating current signal output by the first electronic device 113. For another example, a specific second electronic device 114 supports high-voltage forward wireless charging. After determining that the second electronic device 114 supports high-voltage forward wireless charging, the first electronic device 113 may simultaneously adjust three parameters: a voltage, a frequency, and a duty cycle of an alternating current signal output by the first electronic device 113.

In an application scenario, the second electronic device 114 is a special device and has a limited wireless charging working frequency range. For example, the second electronic device 114 is a medical device, or the second electronic device 114 has a strict requirement for electromagnetic interference (Electromagnetic Interference, EMI) due to a screen refresh rate of the second electronic device, and a wireless charging working frequency range is required to be not within a working frequency range disabled for the second electronic device 114. Before charging the second electronic device, the first electronic device 113 does not know a type of the second electronic device 114, and does not know whether the second electronic device 114 has a working frequency range disabled for wireless charging of the second electronic device.

For this scenario, for this application scenario, this application provides some other embodiments. In these embodiments, before wirelessly charging the second electronic device 114, the first electronic device 113 may first determine whether there is the working frequency range disabled for wireless charging of the second electronic device 114. If there is no working frequency range disabled for wireless charging of the second electronic device 114, step 301 to step 304 or step 504 to step 507 may be directly performed in a manner provided in the foregoing embodiment, to wirelessly charge the second electronic device 114. If there is the working frequency range disabled for wireless charging of the second electronic device 114, the frequency of the alternating current signal in a process of wirelessly charging the second electronic device 114 needs to be considered to be not within the disabled working frequency range.

Specifically, after the first electronic device 113 detects the second electronic device 114, before the first electronic device 113 and the second electronic device 114 enter a power transmission stage, the first electronic device 113 determines whether there is the working frequency range disabled for wireless charging of the second electronic device 114. For example, before step 301 to step 304 or step 504 to step 507 are performed, the method in this embodiment of this application may further include step 600.

Step 600: The processor 101 of the first electronic device 113 determines whether there is the working frequency range disabled for wireless charging of the second electronic device 114.

After step 600, if there is no working frequency range disabled for wireless charging of the second electronic device 114, step 301 to step 304 or step 504 to step 507 may be performed. If there is the working frequency range disabled for wireless charging of the second electronic device 114, step 601 to step 604 or step 611 to step 614 may be performed.

Specifically, if the maximum voltage supported by the second electronic device 114 for wireless charging is less than or equal to the preset voltage threshold, and there is no working frequency range disabled for wireless charging of the second electronic device 114, the first electronic device may propagate a first alternating electromagnetic field to the second electronic device by using the wireless charging coil, to wirelessly charge the second electronic device. For example, the first electronic device 113 may perform step 301 to step 304 to wirelessly charge the second electronic device 114. If the maximum voltage supported by the second electronic device 114 for wireless charging is greater than the preset voltage threshold, and there is no working frequency range disabled for wireless charging of the second electronic device 114, the first electronic device may propagate a second alternating electromagnetic field to the second electronic device by using the wireless charging coil, to wirelessly charge the second electronic device. For example, the first electronic device 113 may perform step 504 to step 507 to wirelessly charge the second electronic device 114. If the maximum voltage supported by the second electronic device 114 for wireless charging is less than or equal to the preset voltage threshold, and there is the working frequency range disabled for wireless charging of the second electronic device 114, the first electronic device may propagate a third alternating electromagnetic field to the second electronic device by using the wireless charging coil, to wirelessly charge the second electronic device. For example, the first electronic device 113 may perform step 601 to step 604 to wirelessly charge the second electronic device 114. If the maximum voltage supported by the second electronic device 114 for wireless charging is greater than the preset voltage threshold, and there is the working frequency range disabled for wireless charging of the second electronic device 114, the first electronic device may propagate a fourth alternating electromagnetic field to the second electronic device by using the wireless charging coil, to wirelessly charge the second electronic device. For example, the first electronic device 113 may perform step 611 to step 614 to wirelessly charge the second electronic device 114.

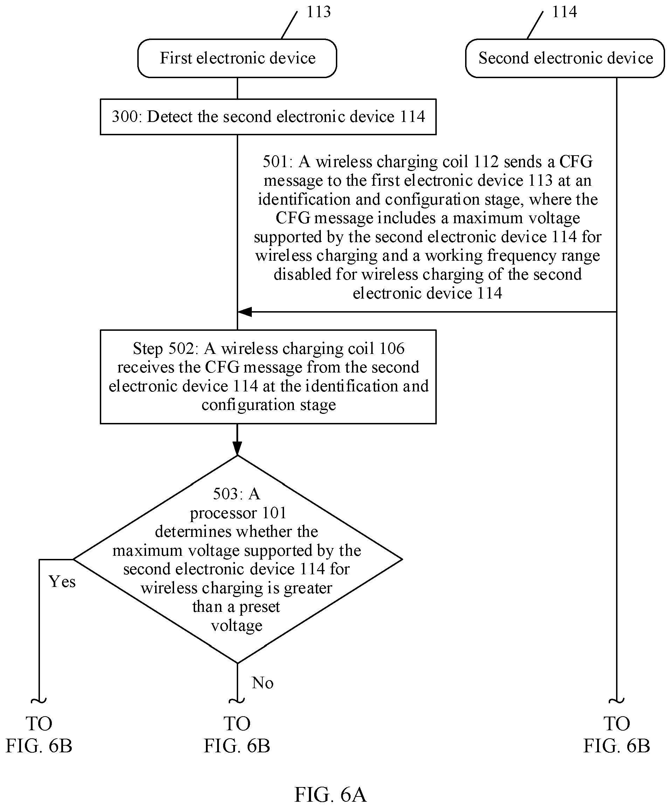

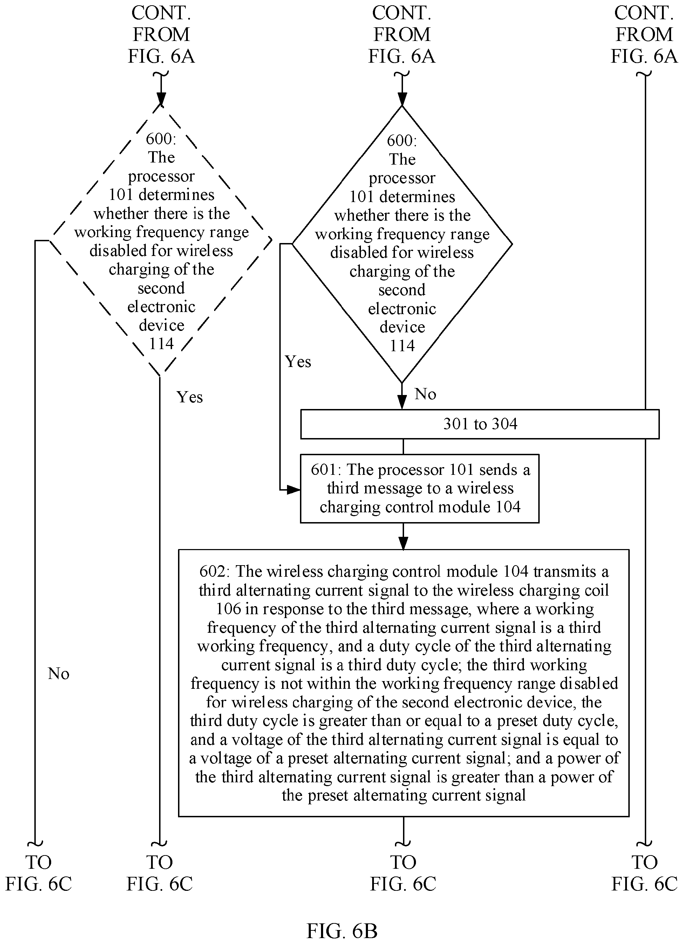

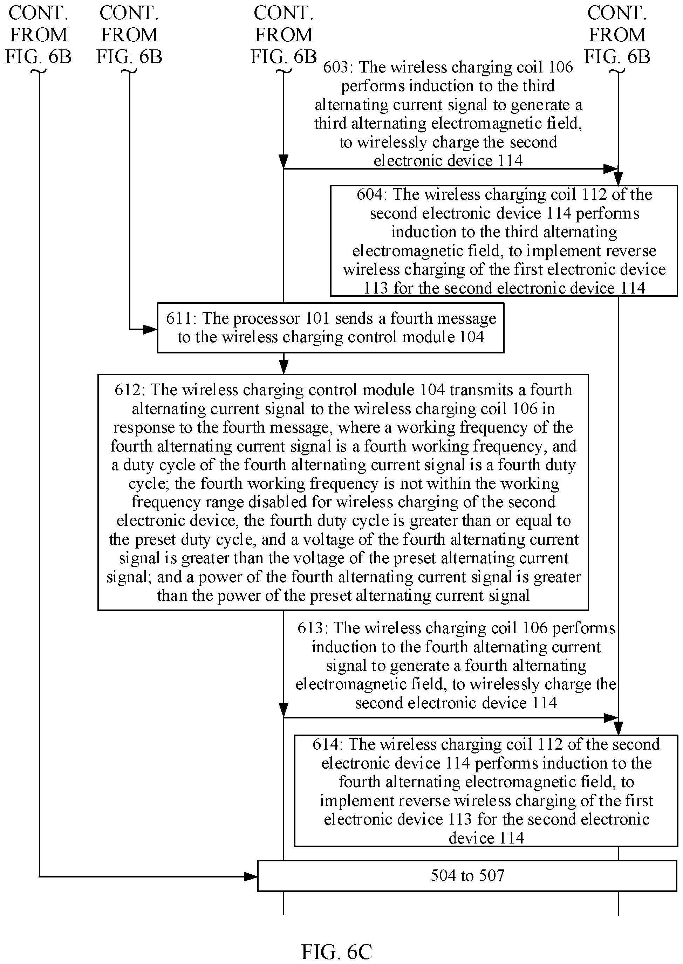

In this embodiment of this application, a sequence of step 600 and step 503 is not limited. Step 600 may be performed before step 503, or step 503 may be performed before step 600, or step 503 and step 600 may be simultaneously performed. In FIG. 6A to FIG. 6C, an example in which step 503 is performed before step 600 is used to describe the method in embodiments of this application.

The foregoing step 601 to step 604 are as follows:
Step 601: The processor 101 of the first electronic device 113 sends a third message to the wireless charging control module 104.
Step 602: The wireless charging control module 104 transmits a third alternating current signal to the wireless charging coil 106 in response to the third message, where a working frequency of the third alternating current signal is a third working frequency, and a duty cycle of the third alternating current signal is a third duty cycle; the third working frequency is not within the working frequency range disabled for wireless charging of the second electronic device, the third duty cycle is greater than or equal to the preset duty cycle, and a voltage of the third alternating current signal is equal to the voltage of the preset alternating current signal; and a power of the third alternating current signal is greater than the power of the preset alternating current signal.
Step 603: The wireless charging coil 106 performs induction to the third alternating current signal to generate a third alternating electromagnetic field, to wirelessly charge the second electronic device 114.
Step 604: The wireless charging coil 112 of the second electronic device 114 performs induction to the third alternating electromagnetic field, to implement wireless charging of the first electronic device 113 for the second electronic device 114.

The foregoing step 611 to step 614 are as follows:
Step 611: The processor 101 of the first electronic device 113 sends a fourth message to the wireless charging control module 104.
Step 612: The wireless charging control module 104 transmits a fourth alternating current signal to the wireless charging coil 106 in response to the fourth message, where a working frequency of the fourth alternating current signal is a fourth working frequency, and a duty cycle of the fourth alternating current signal is a fourth duty cycle; the fourth working frequency is not within the working frequency range disabled for wireless charging of the second electronic device, the fourth duty cycle is greater than or equal to the preset duty cycle, and a voltage of the fourth alternating current signal is greater than the voltage of the preset alternating current signal; and a power of the fourth alternating current signal is greater than the power of the preset alternating current signal.
Step 613: The wireless charging coil 106 performs induction to the fourth alternating current signal to generate a fourth alternating electromagnetic field, to wirelessly charge the second electronic device 114.
Step 614: The wireless charging coil 112 of the second electronic device 114 performs induction to the fourth alternating electromagnetic field, to implement wireless charging of the first electronic device 113 for the second electronic device 114.

In the foregoing embodiment, the indication message sent by the second electronic device 114 to the first electronic device 113 further includes the working frequency range disabled for wireless charging of the second electronic device 114. For example, at the identification and configuration stage, the CFG message sent by the wireless charging coil 112 of the second electronic device 114 to the first electronic device 113 further includes the working frequency range disabled for wireless charging of the second electronic device 114. Alternatively, after the identification and configuration stage ends, the second electronic device 114 may send a CMD to the first electronic device, where the CMD includes the working frequency range disabled for wireless charging of the second electronic device 114. In this way, the first electronic device 113 may determine, based on information carried in the received indication message (such as a CFG message or a CMD), whether there is the working frequency range disabled for wireless charging of the second electronic device 114.

Based on technical solutions provided in the foregoing embodiment, the second electronic device 114 may send the working frequency range disabled for wireless charging of the second electronic device 114 to the first electronic device 113. The processor 101 of the first electronic device 113 selects an appropriate manner to adjust, based on the maximum voltage supported by the second electronic device 114 for wireless charging and whether there is the working frequency range disabled for wireless charging of the second electronic device 114, a parameter (including a working frequency, a duty cycle, and a voltage) of an alternating current signal transmitted to the wireless charging coil 106, to increase a power of the alternating current signal transmitted to the wireless charging coil 106, so that the wireless charging coil 106 may carry more energy, to increase energy transmitted by the first electronic device 113 to the second electronic device 114, and meet a charging requirement of the second electronic device 114 and meet a performance parameter requirement of forward wireless charging of the second electronic device 114.

In some embodiments, the processor 101 of the first electronic device 113 may select an appropriate preset parameter group from Table 2 based on the maximum voltage supported by the second electronic device 114 for wireless charging and whether there is the working frequency range disabled for wireless charging of the second electronic device 114, and use a frequency value, a duty cycle value, and a voltage value in the preset parameter group as the working frequency, the duty cycle, and the voltage of the alternating current signal transmitted to the wireless charging coil 106. For example, based on the maximum voltage supported by the second electronic device 114 for wireless charging, it is determined that the alternating current signal output by the first electronic device 113 is set to the preset parameter group 3, that is, the preset parameter group 3 meets a charging requirement and a performance parameter requirement of forward wireless charging of the second electronic device. In this way, the working frequency, the duty cycle, and the voltage of the alternating current signal transmitted by the first electronic device to the wireless charging coil 106 are respectively adjusted to f3, d3, and V3. In this way, the first electronic device may adjust the parameter of the alternating current signal transmitted to the wireless charging coil 106, including the working frequency, the duty cycle, and the voltage, so that the output alternating current signal meets the performance parameter requirement of forward wireless charging of the second electronic device 114, and also has greater energy to meet the charging requirement of the second electronic device.

In some application scenarios, the processor 107 (for example, the processor 107 may be an application processor, Application Processor, AP) in the second electronic device 114 is not in position. For example, the processor 107 in the second electronic device is in a sleep or power-off state, or the processor 107 does not exist in the second electronic device 114. In a conventional technology, the wireless charging control module 110 of the second electronic device 114 is controlled by the processor 107 in the second electronic device 114. Active interaction is only within a standard protocol range of the industry, and user-defined protocol interaction cannot be initiated independently. For the second electronic device 114 without the battery 108 or the second electronic device 114 whose battery 108 is under-voltage or turned off, when the wireless charging starts, the processor 107 in the second electronic device 114 does not actually work. As a result, interaction cannot be implemented, and an energy balance between supply and demand cannot be negotiated. In this scenario, a value of an initial charging current (also referred to as an initial load current) of the second electronic device 114 is not controlled by the processor 107, and is usually automatically controlled by the charging control module 109 (the charging control module 109 may be a PMIC). The charging control module 109 controls the charging current based on a type of an identified charging port. For example, according to a battery charging protocol (Battery Charging v1.2, BC1.2) in a USB2.0 protocol, if the PMIC identifies that the charging port is a standard downlink port (SDP), for example, if a computer host USB port is used for charging, the charging current may be controlled to 500 mA. If the PMIC identifies that the charging port is a dedicated charging port (DCP), for example, if a dedicated charger is used for charging, the charging current may be controlled to 1.5 A. In a wireless charging scenario, the PMIC cannot identify a type of a charging port, and may set an initial charging current to 500 mA or even larger. According to a formula for a relationship between a voltage and a current on an inductor: V=-L*di/dt, where V represents a voltage, L represents an inductance, and i represents a current. At a moment when the wireless charging control module 109 in the second electronic device 114 starts to supply power to another part of the second electronic device 114, a suddenly increased transient current causes a large drop of an output voltage (namely, a voltage at an input end of the charging control module 109) of the wireless charging control module 110 of the second electronic device 114. When a voltage provided by the first electronic device 113 to the second electronic device 114 is small and charging energy is insufficient, under-voltage lockout (Under voltage Lockout, UVLO) of the second electronic device 114 is triggered. As a result, there are repeat start and stop during charging, and normal charging cannot be performed.

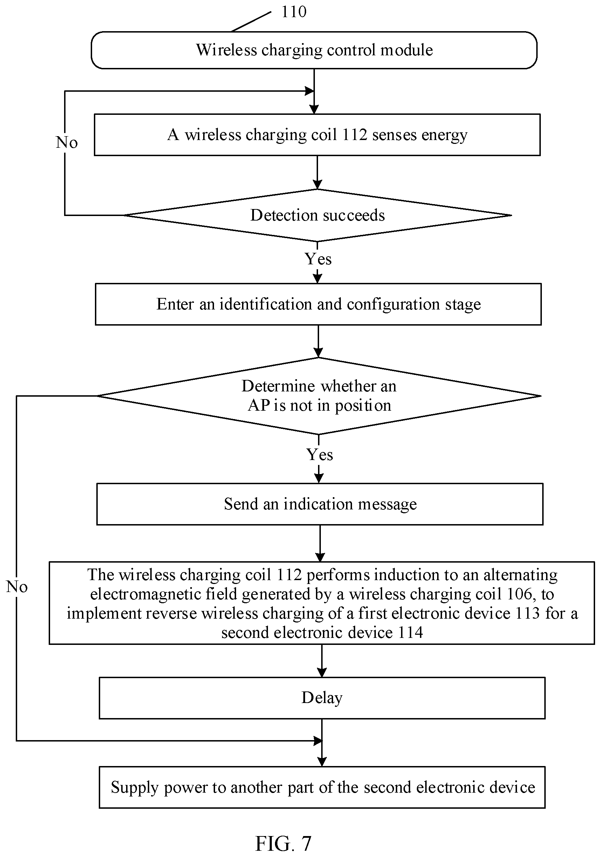

For the foregoing application scenario, this application provides an embodiment. Refer to FIG. 7. FIG. 7 is an operation flowchart of the wireless charging control module 110 of the second electronic device according to an embodiment of this application. As shown in FIG. 7, in this embodiment, after sensing energy by using the wireless charging coil 112, the wireless charging control module 110 of the second electronic device 114 sends the SIG message to the first electronic device 113, that is, detection succeeds, and then the identification and configuration stage is entered. In addition, before step 501 in which the wireless charging coil 112 of the second electronic device 114 sends the indication message (such as the CMD or the CFG message) to the first electronic device in the foregoing embodiment, the method further includes: The wireless charging control module 110 of the second electronic device 114 determines whether the processor 107 of the second electronic device 114 is in position. If the processor 107 of the second electronic device 114 is in position, the processor 107 of the second electronic device 114 may perform wireless charging control, and control the wireless charging control module 110 to supply power to another part of the second electronic device 114. If the processor 107 of the second electronic device 114 is not in position, the wireless charging control module 110 of the second electronic device 114 actively controls the wireless charging coil 112 to send the indication message, to notify the first electronic device 113 that the second electronic device 114 has the wireless charging coil 112 with a small inductance and requires more energy, and indicate the maximum voltage supported by the second electronic device 114 for wireless charging and the working frequency range disabled for wireless charging of the second electronic device 114. In this way, the first electronic device 113 transmits a corresponding alternating current signal to the wireless charging coil 106 of the first electronic device 113, so that the wireless charging coil 106 generates a corresponding alternating electromagnetic field, to charge the second electronic device 11. The wireless charging coil 112 of the second electronic device 114 performs induction to the alternating electromagnetic field generated by the wireless charging coil 106, to implement wireless charging of the first electronic device 113 for the second electronic device 114. After a delay of a specific time, the wireless charging control module 110 supplies power to another part of the second electronic device 114, to prevent normal charging and power-on failures due to a lack of initial energy.

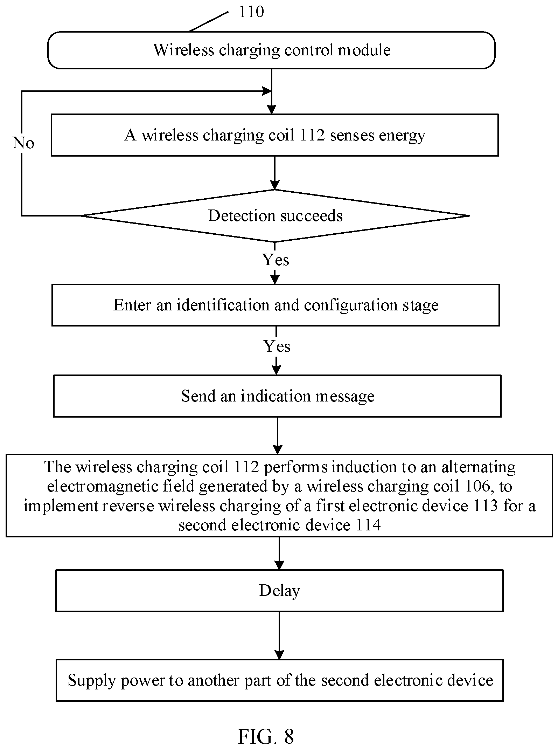

For the foregoing application scenario, this application further provides another embodiment. Refer to FIG. 8. FIG. 8 is an operation flowchart of the wireless charging control module of the second electronic device according to an embodiment of this application. As shown in FIG. 8, in this embodiment, after sensing energy by using the wireless charging coil 112, the wireless charging control module 110 of the second electronic device 114 sends the SIG message to the first electronic device 113, that is, detection succeeds, and then the identification and configuration stage is entered. The wireless charging control module 110 of the second electronic device 114 actively controls the wireless charging coil 112 to send the indication message (such as the CMD or the CFG message). That is, the wireless charging control module 110 of the second electronic device 114 does not need to determine whether the processor 107 of the second electronic device 114 is in position, and directly sends the indication message to the first electronic device 113, to notify the first electronic device 113 that the second electronic device 114 has the wireless charging coil 112 with a small inductance and requires more energy, and indicate the maximum voltage supported by the second electronic device 114 for wireless charging and the working frequency range disabled for wireless charging of the second electronic device 114. In this way, the first electronic device 113 transmits a corresponding alternating current signal to the wireless charging coil 106 of the first electronic device 113, so that the wireless charging coil 106 generates a corresponding alternating electromagnetic field, to charge the second electronic device 11. The wireless charging coil 112 of the second electronic device 114 performs induction to the alternating electromagnetic field generated by the wireless charging coil 106, to implement wireless charging of the first electronic device 113 for the second electronic device 114. After a delay of a specific time, the wireless charging control module 110 supplies power to another part of the second electronic device 114, to prevent normal charging and power-on failures due to a lack of initial energy.

Based on technical solutions provided in the foregoing two embodiments, the wireless charging control module 110 of the second electronic device 114 may send the indication message to the first electronic device 113, to notify the first electronic device 114 that the second electronic device 114 supports high-voltage forward wireless charging and requires more energy, and the like. This is equivalent to actively initiating user-defined protocol interaction, and does not require participation of another processor. It may be ensured that even when the processor 107 of the second electronic device 114 is not in position, the first electronic device 113 can still receive the indication message sent by the wireless charging control module 110 of the second electronic device 114, and based on information carried in the indication message, use a series of methods including increasing a voltage of the alternating current signal, reducing a frequency of the alternating current signal and/or increasing a duty cycle of the alternating current signal, to increase energy output by the first electronic device 113 to the second electronic device 114. This avoids a problem that power supply to the second electronic device 114 cannot be normally performed due to insufficient reverse energy, and the second electronic device 114 is stably charged. That is, before a charging step is entered, charging control may be implemented based on the technical solutions provided in the foregoing two embodiments, provided that the wireless charging coil 112 and the wireless charging control module 110 in the second electronic device 114 are powered on, regardless of whether another part of the second device 114 works. Certainly, if the processor 107 of the second electronic device 114 is in position, for example, after the wireless charging control module 110 of the second electronic device 114 supplies power to another part of the second electronic device 114, the processor 107 of the second electronic device 1114 starts to run, the processor 107 may actively control a charging procedure, for example, the processor 107 control a value of an initial charging current, to avoid that an output voltage of the wireless charging control module 110 of the second electronic device 114 drops due to an instantaneous load surge. In addition, after the processor 107 of the second electronic device 114 starts to run, the processor 107 may actively interact with the processor 101 in the first electronic device 113 to control a charging parameter.

It should be understood that, in the foregoing embodiment, the wireless charging control module 110 of the second electronic device 114 has a function of actively sending a user-defined message other than a standard protocol (a Qi standard protocol) to the first electronic device 113, for example, the wireless charging control module 110 is provided with a microcontroller unit (Microcontroller Unit, MCU). In this way, the wireless charging control module 110 of the second electronic device 114 may encode and send the user-defined message by using the MCU of the wireless charging control module 110.

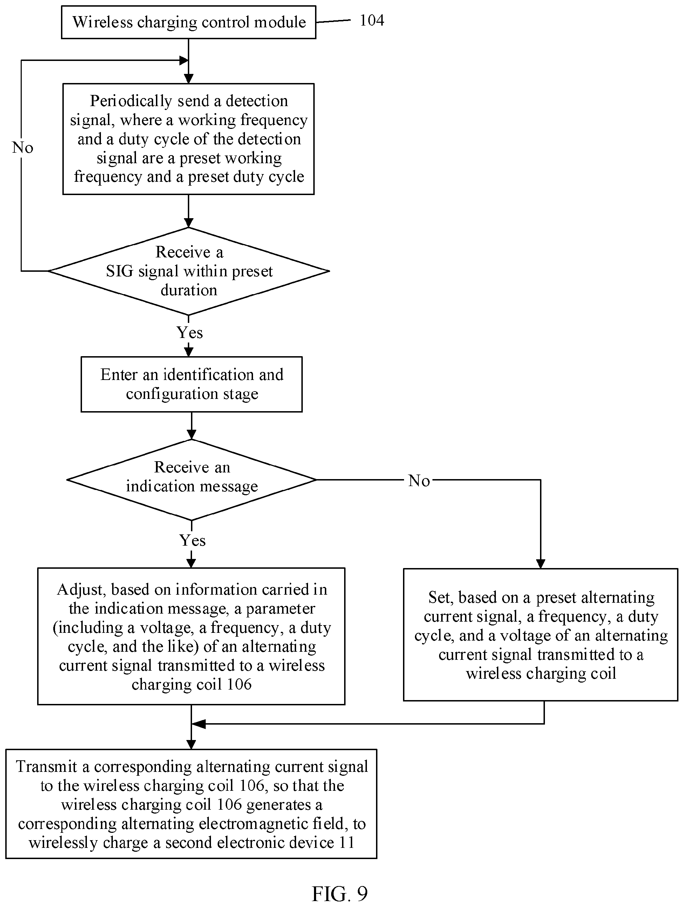

For the foregoing application scenario, in the foregoing two embodiments provided in this application, an operation procedure of the first electronic device is the same. Refer to FIG. 9. FIG. 9 is an operation flowchart of the wireless charging control module 104 of the first electronic device 113 according to an embodiment of this application. After the first electronic device 113 determines that there is the metal object placed on the wireless charging coil 106, as shown in FIG. 9, the wireless charging control module 104 periodically sends the detection signal by using the wireless charging coil 106. The working frequency and the duty cycle of the detection signal are the preset working frequency and the preset duty cycle. After sending the detection signal, if the wireless charging coil 106 receives the SIG message within the preset duration, the detection succeeds and the identification and configuration stage is entered. If the wireless charging coil 106 receives the indication message, and the indication message includes the maximum voltage supported by the second electronic device 114 for wireless charging (which may further include the working frequency range disabled for wireless charging of the second electronic device), the wireless charging control module 104 adjusts, based on information carried in the CFG message (or the CMD), a parameter (including a working frequency, a duty cycle, and a voltage) of an alternating current signal transmitted to the wireless charging coil. For a parameter adjustment manner, refer to the foregoing embodiment. Details are not described herein again. If the CFG message (or the CMD) is not received, based on the preset alternating current signal, a working frequency and a duty cycle of an alternating current signal transmitted to the wireless charging coil are set as the preset working frequency and the preset duty cycle. The first electronic device 113 transmits the alternating current signal with the parameter to the wireless charging coil 106. The wireless charging coil 106 performs induction to the alternating current signal to generate an alternating electromagnetic field, to wirelessly charge the second electronic device 114, that is, to provide energy for the second electronic device 114.

Some other embodiments of this application provide an electronic device, and the electronic device is a first electronic device 113. The first electronic device 113 has a function of wirelessly charging a second electronic device 114. The first electronic device 113 includes a processor 101, a wireless charging control module 104, and a wireless charging coil 106. An inductance of the wireless charging coil 106 is less than a preset inductance threshold. The wireless charging coil 106 is configured to detect the second electronic device 114. The processor 101 is configured to: detect the second electronic device 114 by using the wireless charging coil 106; and after detecting the second electronic device 114, send a first message to the wireless charging control module 104. The wireless charging control module 104 is further configured to transmit a first alternating current signal to the wireless charging coil 106 in response to the first message. A working frequency of the first alternating current signal is a first working frequency, and a duty cycle of the first alternating current signal is a first duty cycle. The first working frequency is less than a preset working frequency, and the first duty cycle is greater than or equal to a preset duty cycle, or the first working frequency is equal to a preset working frequency, and the first duty cycle is greater than a preset duty cycle. A power of a preset alternating current signal corresponding to the preset working frequency and the preset duty cycle meets a wireless charging standard. The wireless charging coil 106 is further configured to: perform induction to the first alternating current signal to generate a first alternating electromagnetic field, to wirelessly charge the second electronic device 114.

In some embodiments, that the processor 101 is configured to detect the second electronic device 114 by using the wireless charging coil 106 includes: The processor 101 is configured to control the wireless charging coil 106 to transmit a detection signal. A working frequency of the detection signal is the preset working frequency, a duty cycle of the detection signal is the preset duty cycle, a power of the detection signal corresponding to the preset working frequency and the preset duty cycle meets the wireless charging standard, and the detection signal is the preset alternating current signal. The wireless charging coil 106 is further configured to receive a signal strength SIG message from the second electronic device 114. The processor 101 is further configured to: when the wireless charging coil 106 receives the SIG message from the second electronic device 114, determine that the second electronic device 114 is detected.

In some embodiments, the wireless charging coil 106 is further configured to receive an indication message from the second electronic device 114 before the first electronic device 113 enters a power transmission stage. The indication message includes a maximum voltage supported by the second electronic device 114 for wireless charging. That the processor 101 is configured to: detect the second electronic device 114 by using the wireless charging coil 106; and after detecting the second electronic device 114, send a first message to the wireless charging control module 104 includes: The processor 101 is configured to send the first message to the wireless charging control module 104 when the maximum voltage supported by the second electronic device 114 for wireless charging is less than or equal to a preset voltage threshold.

In some embodiments, the processor 101 is further configured to: when the maximum voltage supported by the second electronic device 114 for wireless charging is greater than a preset voltage threshold, send a second message to the wireless charging control module 104. The wireless charging control module 104 is further configured to transmit a second alternating current signal to the wireless charging coil 106 in response to the second message. A working frequency of the second alternating current signal is a second working frequency, and a duty cycle of the second alternating current signal is a second duty cycle; and the second working frequency is less than or equal to the preset working frequency, the second duty cycle is greater than or equal to the preset duty cycle, and a voltage of the second alternating current signal is greater than a voltage of the preset alternating current signal. The wireless charging coil 106 is further configured to: perform induction to the second alternating current signal to generate a second alternating electromagnetic field, to wirelessly charge the second electronic device 114.

In some embodiments, the processor 101 is further configured to determine whether there is a working frequency range disabled for wireless charging of the second electronic device 114.

The processor 101 is further configured to: when the maximum voltage supported by the second electronic device 114 for wireless charging is less than or equal to a preset voltage threshold, and there is no working frequency range disabled for wireless charging of the second electronic device 114, send a first message to the wireless charging control module 104.

The processor 101 is further configured to: when the maximum voltage supported by the second electronic device 114 for wireless charging is greater than a preset voltage threshold, and there is the working frequency range disabled for wireless charging of the second electronic device 114, send a second message to the wireless charging control module 104.

The processor 101 is further configured to: when determining that the maximum voltage supported by the second electronic device 114 for wireless charging is less than or equal to a preset voltage threshold, and there is the working frequency range disabled for wireless charging of the second electronic device 114, send a third message to the wireless charging control module 104. The wireless charging control module 104 is further configured to transmit a third alternating current signal to the wireless charging coil 106 in response to the third message. A working frequency of the third alternating current signal is a third working frequency, and a duty cycle of the third alternating current signal is a third duty cycle; the third working frequency is not within the working frequency range disabled for wireless charging of the second electronic device 114, the third duty cycle is greater than or equal to the preset duty cycle, and a voltage of the third alternating current signal is equal to a voltage of the preset alternating current signal; and a power of the third alternating current signal is greater than the power of the preset alternating current signal. The wireless charging coil 106 is further configured to: perform induction to the third alternating current signal to generate a third alternating electromagnetic field, to wirelessly charge the second electronic device 114.

The processor 101 is further configured to: when determining that the maximum voltage supported by the second electronic device 114 for wireless charging is greater than a preset voltage threshold, and there is the working frequency range disabled for wireless charging of the second electronic device 114, send a fourth message to the wireless charging control module 104. The wireless charging control module 104 is further configured to transmit a fourth alternating current signal to the wireless charging coil 106 in response to the fourth message. A working frequency of the fourth alternating current signal is a fourth working frequency, and a duty cycle of the fourth alternating current signal is a fourth duty cycle; the fourth working frequency is not within the working frequency range disabled for wireless charging of the second electronic device 114, the fourth duty cycle is greater than or equal to the preset duty cycle, and a voltage of the fourth alternating current signal is greater than a voltage of the preset alternating current signal; and a power of the fourth alternating current signal is greater than the power of the preset alternating current signal. The wireless charging coil 106 is further configured to: perform induction to the fourth alternating current signal to generate a fourth alternating electromagnetic field, to wirelessly charge the second electronic device 114.

In some embodiments, the indication message received by the wireless charging coil 106 from the second electronic device 114 further includes the working frequency range disabled for wireless charging of the second electronic device 114.

Some other embodiments of this application provide an electronic device. A first electronic device has a function of wirelessly charging a second electronic device; the first electronic device includes a wireless charging control module, a wireless charging coil, a memory, a battery, and one or more processors; an inductance of the wireless charging coil is less than a preset inductance threshold; and the wireless charging control module, the wireless charging coil, the memory, and the battery are coupled to the processor; and
the memory stores computer program code, the computer program code includes computer instructions, and when the computer instructions are executed by the processor, the first electronic device is enabled to perform steps performed by the first electronic device in the foregoing method embodiments, to implement a corresponding function. For a structure of the electronic device, refer to the structure of the electronic device 200 shown in FIG. 2.

Some other embodiments of this application provide an electronic device, and the electronic device is a second electronic device 114. An inductance of a wireless charging coil 112 of the second electronic device 114 is less than a preset inductance threshold. The wireless charging coil 112 is configured to reply with a SIG message to the first electronic device 113 in response to a detection signal of a first electronic device 113, where the SIG message is used to respond to the detection signal of the first electronic device. The wireless charging coil 112 is further configured to: before a power transmission stage is entered, send an indication message to the first electronic device 113, where the indication message includes a maximum voltage supported by the second electronic device 114 for wireless charging. The maximum voltage supported by the second electronic device 114 for wireless charging is used for controlling a voltage of an alternating current signal in a wireless charging process by the first electronic device 113. The wireless charging coil 112 is further configured to perform induction to an alternating electromagnetic field provided by the first electronic device 113, to implement wireless charging of the first electronic device 113 for the second electronic device 114.

In the foregoing embodiment, the indication message may further carry a working frequency range disabled for wireless charging of the second electronic device 114.

Some other embodiments of this application provide an electronic device. The electronic device is a second electronic device; the second electronic device has a function of receiving wireless charging from the first electronic device; the second electronic device includes a wireless charging control module, a wireless charging coil, and a memory; an inductance of the wireless charging coil is less than a preset inductance threshold; and the wireless charging control module is coupled to the wireless charging coil and the memory; and
the memory stores computer program code, the computer program code includes computer instructions, and when the computer instructions are executed by the wireless charging control module, the second electronic device is enabled to perform steps performed by the second electronic device in the foregoing method embodiments, to implement a corresponding function.

For a structure of the second electronic device, refer to the structure of the electronic device 200 shown in FIG. 2. Certainly, the second electronic device may include more or fewer components than the electronic device 200 shown in FIG. 2. This is not limited in this embodiment of this application.

The wireless charging control module in the second electronic device includes a microprocessor. The microprocessor is configured to execute the computer instructions, so that the second electronic device is enabled to perform steps performed by the second electronic device in the foregoing method embodiments, to implement a corresponding function.

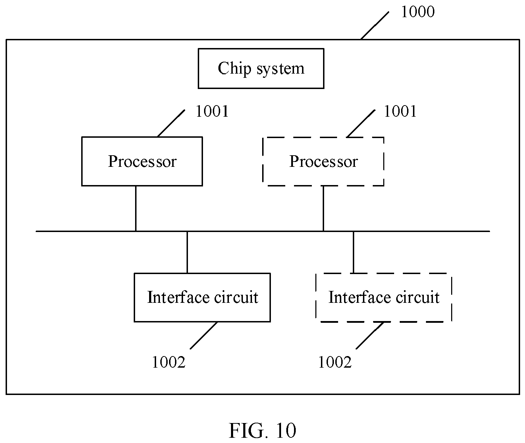

An embodiment of this application further provides a chip system, and the chip system is applied to a first electronic device or a second electronic device. As shown in FIG. 10, a chip system 1000 includes at least one processor 1001 and at least one interface circuit 1002.

The processor 1001 and the interface circuit 1002 may be interconnected by using a line. For example, the interface circuit 1002 may be configured to receive a signal from another apparatus (such as a memory of an electronic device). For another example, the interface circuit 1002 may be configured to send a signal to another apparatus (for example, the processor 1001). For example, the interface circuit 1002 may read instructions stored in the memory, and send the instructions to the processor 1001. When the instructions are executed by the processor 1001, the first electronic device or the second electronic device is enabled to perform steps performed by the first electronic device or the second electronic device in the foregoing method embodiments. Certainly, the chip system may further include another discrete component. This is not specifically limited in this embodiment of this application.

An embodiment of this application further provides a computer storage medium. The computer storage medium includes computer instructions. When the computer instructions are run on the first electronic device or the second electronic device, the first electronic device or the second electronic device is enabled to perform functions or steps performed by the first electronic device or the second electronic device in the foregoing method embodiments.

An embodiment of this application further provides a computer program product. When the computer program product is run on a first electronic device or a second electronic device, the first electronic device or the second electronic device is enabled to perform steps performed by the first electronic device or the second electronic device in the foregoing method embodiments.

Based on the foregoing descriptions of the implementations, a person skilled in the art may clearly understand that for the purpose of convenient and brief descriptions, division of the foregoing functional modules is merely used as an example for description. During actual application, the foregoing functions can be allocated to different functional modules for implementation according to a requirement, that is, an inner structure of an apparatus is divided into different functional modules to implement all or some of the functions described above. For a specific working process of the foregoing system, apparatus, and unit, refer to a corresponding process in the foregoing method embodiments. Details are not described herein again.

Functional units in embodiments of this application may be integrated into one processing unit, or each of the units may exist alone physically, or two or more units may be integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in embodiments of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of embodiments of this application, but are not intended to limit a protection scope of embodiments of this application. Any variation or replacement within the technical scope disclosed in embodiments of this application shall fall within the protection scope of embodiments of this application. Therefore, the protection scope of embodiments of this application shall be subject to a protection scope of the claims.

## Claims

1. A wireless charging control method, applied to a first electronic device and used for wirelessly charging a second electronic device by the first electronic device, wherein an inductance of a wireless charging coil of the first electronic device is less than a preset inductance threshold, and the method comprises:
detecting, by the first electronic device, the second electronic device; and
after the second electronic device is detected, propagating, by the first electronic device, a first alternating electromagnetic field to the second electronic device by using the wireless charging coil, to wirelessly charge the second electronic device, wherein
the first alternating electromagnetic field is generated by induction of the wireless charging coil to a first alternating current signal, a working frequency of the first alternating current signal is a first working frequency, and a duty cycle of the first alternating current signal is a first duty cycle; the first working frequency is less than a preset working frequency, and the first duty cycle is greater than or equal to a preset duty cycle, or the first working frequency is equal to a preset working frequency, and the first duty cycle is greater than a preset duty cycle; and a power of a preset alternating current signal corresponding to the preset working frequency and the preset duty cycle meets a wireless charging standard.

2. The method according to claim 1, wherein the wireless charging standard specifies a power range of a power output when a standard wireless charger wirelessly charges another electronic device; and an inductance of a wireless charging coil of the standard wireless charger is greater than or equal to the preset inductance threshold.

3. The method according to claim 1 or 2, wherein the detecting, by the first electronic device, the second electronic device comprises:
transmitting, by the first electronic device, a detection signal by using the wireless charging coil, wherein a working frequency of the detection signal is the preset working frequency, a duty cycle of the detection signal is the preset duty cycle, a power of the detection signal corresponding to the preset working frequency and the preset duty cycle meets the wireless charging standard, and the detection signal is the preset alternating current signal; and
if the first electronic device receives a signal strength SIG message from the second electronic device by using the wireless charging coil, determining that the second electronic device is detected.

4. The method according to claim 3, wherein after the detecting, by the first electronic device, the second electronic device, the method further comprises:
before the first electronic device and the second electronic device enter a power transmission stage, receiving, by the first electronic device, an indication message from the second electronic device by using the wireless charging coil, wherein the indication message comprises a maximum voltage supported by the second electronic device for wireless charging; and
the propagating, by the first electronic device, a first alternating electromagnetic field to the second electronic device by using the wireless charging coil, to wirelessly charge the second electronic device comprises:
if the maximum voltage supported by the second electronic device for wireless charging is less than or equal to a preset voltage threshold, propagating, by the first electronic device, the first alternating electromagnetic field to the second electronic device by using the wireless charging coil, to wirelessly charge the second electronic device.

5. The method according to claim 4, wherein the method further comprises:
if the maximum voltage supported by the second electronic device for wireless charging is greater than the preset voltage threshold, propagating, by the first electronic device, a second alternating electromagnetic field to the second electronic device by using the wireless charging coil, to wirelessly charge the second electronic device, wherein
the second alternating electromagnetic field is generated by induction of the wireless charging coil to a second alternating current signal, a working frequency of the second alternating current signal is a second working frequency, and a duty cycle of the second alternating current signal is a second duty cycle; and the second working frequency is less than or equal to the preset working frequency, the second duty cycle is greater than or equal to the preset duty cycle, and a voltage of the second alternating current signal is greater than a voltage of the preset alternating current signal.

6. The method according to any one of claims 1 to 5, wherein the method further comprises:
determining, by the first electronic device, whether there is a working frequency range disabled for wireless charging of the second electronic device; and
the propagating, by the first electronic device, a first alternating electromagnetic field to the second electronic device by using the wireless charging coil, to wirelessly charge the second electronic device comprises:
if there is no working frequency range disabled for wireless charging of the second electronic device, propagating, by the first electronic device, the first alternating electromagnetic field to the second electronic device by using the wireless charging coil, to wirelessly charge the second electronic device.

7. The method according to claim 5, wherein the method further comprises:
determining, by the first electronic device, whether there is a working frequency range disabled for wireless charging of the second electronic device; and
the propagating, by the first electronic device, a second alternating electromagnetic field to the second electronic device by using the wireless charging coil, to wirelessly charge the second electronic device comprises:
if there is no working frequency range disabled for wireless charging of the second electronic device, propagating, by the first electronic device, the second alternating electromagnetic field to the second electronic device by using the wireless charging coil, to wirelessly charge the second electronic device.

8. The method according to claim 6 or 7, wherein the method further comprises:
if the maximum voltage supported by the second electronic device for wireless charging is less than or equal to a preset voltage threshold, and there is the working frequency range disabled for wireless charging of the second electronic device, propagating, by the first electronic device, a third alternating electromagnetic field to the second electronic device by using the wireless charging coil, to wirelessly charge the second electronic device, wherein
the third alternating electromagnetic field is generated by induction of the wireless charging coil to a third alternating current signal, a working frequency of the third alternating current signal is a third working frequency, and a duty cycle of the third alternating current signal is a third duty cycle; the third working frequency is not within the working frequency range disabled for wireless charging of the second electronic device, the third duty cycle is greater than or equal to the preset duty cycle, and a voltage of the third alternating current signal is equal to a voltage of the preset alternating current signal; and a power of the third alternating current signal is greater than the power of the preset alternating current signal.

9. The method according to claim 6 or 7, wherein the method further comprises:
if the maximum voltage supported by the second electronic device for wireless charging is greater than the preset voltage threshold, and there is the working frequency range disabled for wireless charging of the second electronic device, propagating, by the first electronic device, a fourth alternating electromagnetic field to the second electronic device by using the wireless charging coil, to wirelessly charge the second electronic device, wherein
the fourth alternating electromagnetic field is generated by induction of the wireless charging coil to a fourth alternating current signal, a working frequency of the fourth alternating current signal is a fourth working frequency, and a duty cycle of the fourth alternating current signal is a fourth duty cycle; the fourth working frequency is not within the working frequency range disabled for wireless charging of the second electronic device, the fourth duty cycle is greater than or equal to the preset duty cycle, and a voltage of the fourth alternating current signal is greater than a voltage of the preset alternating current signal; and a power of the fourth alternating current signal is greater than the power of the preset alternating current signal.

10. The method according to any one of claims 6 to 9, wherein the method further comprises:
before the first electronic device and the second electronic device enter the power transmission stage, receiving, by the first electronic device, an indication message from the second electronic device by using the wireless charging coil, wherein the indication message comprises the working frequency range disabled for wireless charging of the second electronic device.

11. The method according to any one of claims 1 to 10, wherein the inductance of the wireless charging coil is 3.5 µH, the first working frequency is 110 kHz, and the first duty cycle is 60%.

12. A wireless charging control method, applied to a second electronic device and used for wirelessly charging the second electronic device by a first electronic device, wherein an inductance of a wireless charging coil of the second electronic device is less than a preset inductance threshold, and the method comprises:
before the second electronic device and the first electronic device enter a power transmission stage, sending, by the second electronic device, an indication message to the first electronic device by using the wireless charging coil, wherein the indication message comprises a maximum voltage supported by the second electronic device for wireless charging; and
performing, by the second electronic device by using the wireless charging coil, induction to an alternating electromagnetic field provided by the first electronic device, to implement wireless charging of the first electronic device for the second electronic device, wherein the alternating electromagnetic field provided by the first electronic device is generated based on an alternating current signal adjusted based on the maximum voltage supported by the second electronic device for wireless charging.

13. The wireless charging control method according to claim 12, wherein the indication message further carries a working frequency range disabled for wireless charging of the second electronic device; and the alternating electromagnetic field provided by the first electronic device is generated based on an alternating current signal adjusted based on the maximum voltage supported by the second electronic device for wireless charging and the working frequency range disabled for wireless charging of the second electronic device.

14. An electronic device, wherein the electronic device is a first electronic device; the first electronic device has a function of wirelessly charging a second electronic device; the first electronic device comprises a wireless charging control module, a wireless charging coil, a memory, a battery, and one or more processors; an inductance of the wireless charging coil is less than a preset inductance threshold; and the wireless charging control module, the wireless charging coil, the memory, and the battery are coupled to the processor; and
the memory stores computer program code, the computer program code comprises computer instructions, and when the computer instructions are executed by the processor, the first electronic device is enabled to perform the method according to any one of claims 1 to 11.

15. An electronic device, wherein the electronic device is a second electronic device; the second electronic device has a function of receiving wireless charging from the first electronic device; the second electronic device comprises a wireless charging control module, a wireless charging coil, and a memory; an inductance of the wireless charging coil is less than a preset inductance threshold; and the wireless charging control module is coupled to the wireless charging coil and the memory; and
the memory stores computer program code, the computer program code comprises computer instructions, and when the computer instructions are executed by the wireless charging control module, the second electronic device is enabled to perform the method according to either of claims 12 and 13.

16. The electronic device according to claim 15, wherein the wireless charging control module comprises a microprocessor; and
the microprocessor is configured to execute the computer instructions, so that the second electronic device is enabled to perform the method according to either of claims 12 and 13.

17. A computer-readable storage medium, comprising computer instructions, wherein when the computer instructions are run on an electronic device, the electronic device is enabled to perform the method according to any one of claims 1 to 13.
